(19) Europäisches Patentamt
European Patent Office
Office européen des brevets

(11) **EP 4 535 611 A1**

(12) **EUROPEAN PATENT APPLICATION**
published in accordance with Art. 153(4) EPC

(43) Date of publication:
**09.04.2025 Bulletin 2025/15**

(21) Application number: **23815748.1**

(22) Date of filing: **15.05.2023**

(51) International Patent Classification (IPC):
*H02J 50/40* (2016.01)        *H02J 50/12* (2016.01)

(52) Cooperative Patent Classification (CPC):
**H02J 50/12; H02J 50/40**

(86) International application number:
**PCT/JP2023/018093**

(87) International publication number:
**WO 2023/233988 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.05.2022   JP 2022087917
24.04.2023   JP 2023071064**

(71) Applicants:
• **LAUREL BANK MACHINES CO., LTD.
Tokyo 105-8414 (JP)**
• **Laurel Machinery Co., Ltd.
Osaka-shi, Osaka 542-0086 (JP)**

• **Laurel Precision Machines Co., Ltd.
Osaka-shi, Osaka 542-0086 (JP)**
• **Institute of Science Tokyo
Tokyo 152-8550 (JP)**

(72) Inventors:
• **NAKANISHI, Hideyuki
Tokyo 1058414 (JP)**
• **OHORI, Toshiki
Tokyo 1528550 (JP)**
• **HIJIKATA, Wataru
Tokyo 1528550 (JP)**
• **LI, Xiang
Tokyo 1058414 (JP)**

(74) Representative: **Schäfer, Matthias W.
Patentanwalt
Schwanseestrasse 43
81549 München (DE)**

(54) **WIRELESS POWER SUPPLY SYSTEM AND METHOD, AND WIRELESS POWER-RECEIVING SYSTEM**

(57)     [Problem] To provide a wireless power feeding system, a wireless power feeding method, and a wireless power receiving system that can easily execute impedance matching even in the case of fluctuations of impedances of a load side circuit.

[Solution] In a wireless power feeding system (1) that transmits and receives power between a power transmission coil (32) and a power reception coil (41) using the magnetic field resonance method, the power reception coil (41) is configured to be capable of selecting a plurality of coil regions (41A, 41B, 41C) that have different numbers of coil windings in accordance with the connecting positions of a plurality of terminals provided at the power reception coil (41), and a controller (92) changes an inductance of the power reception coil (41) by switching the plurality of terminals to mitigate the difference between a load side impedance, which is an impedance from the input end (IE) of the power transmission device (3) to a circuit on the load (8) side, and an input side impedance, which is an impedance from the input end (IE) of the power transmission device (3) to a circuit on the AC power source (5) side.

[ Fig. 3 ]

## Description

### Field of the Invention

The present invention relates to a wireless power feeding system, a wireless power feeding method, and a wireless power receiving system.

### Background Art

Recently, wireless power feeding systems using magnetic fields are being researched and developed. An electromagnetic coupling (electromagnetic inducing) method and a magnetic field resonance method are known as such power feeding methods using magnetism. In the magnetic field resonance method, when oscillation of a magnetic field generated by AC current flowing in a resonance circuit of a power transmission device is transmitted to a resonance circuit of a power reception device to cause resonance, power is transmitted via a state in which magnetic fields generated by coils of the respective resonance circuits are firmly coupled (magnetic field resonance coupling). Wireless power supply using the magnetic field resonance method has the advantage of a longer power suppliable distance compared to wireless power supply using the electromagnetic coupling method (see, for instance, Patent Literature 1). It should be noted that although the magnetic field resonance method is also a method that uses magnetic coupling, the method using resonance is referred to as the magnetic field resonance method for ease of understanding.

In such a wireless power feeding system, in order to efficiently transmit power, it is necessary to set an impedance of a load side circuit that includes the power reception device, a load, or the like when seen from an input end (IE) of the power transmission device and an impedance on a power source side when seen from the input end (IE) of the power transmission device.

Generally, various parameters of the resonance circuit of the power transmission device and the resonance circuit of the power reception device are preliminarily set so that impedance matching (impedance matching) is established when a power transmission coil of the power transmission device and a power transmission coil of the power reception device are positioned at a specified relative position. Possible factors causing mismatch of such impedance include, for instance, changes in the relative positional relationship between the power transmission coil and the power reception coil and changes in the charging state of load of a battery, a motor, or the like, as an object of power supply.

Patent Literature 1 discloses a configuration in which, on a receiving side (receiver destination) where a resonance element and a driven element are coupled by electromagnetic induction and AC power is supplied to a rectifying circuit from the resonance element to the driven element and through an automated matching unit, the automated matching unit and the driven element composes an impedance matching unit, the automated matching unit adjusts the impedance of a resonance circuit that has the resonance element in accordance with a coupling coefficient that fluctuates depending on transmission distance, and the driven element matches the impedance between the resonance element and the rectifying circuit.

Moreover, in Patent Literature 2, in wireless power supply using the magnetic field resonance method, matching the impedance between a load side impedance and an input side impedance by changing the strength of magnetic field coupling between a power feeding coil and a power transmission coil by switching a plurality of power feeding coils (driver coils) is described.

### Citation List

### Patent Literature

Patent Literature 1: Japanese Patent Application Laid-Open No. 2011-50140
Patent Literature 2: International Publication No. 2022/244730

## Summary of the Invention

### Problem the Invention is to Solve

However, in order to realize impedance matching by providing a resonance circuit different from a conventional power reception coil, it is necessary to operate a variable inductor or a variable capacitor while maintaining a resonant state in accordance with changes in the impedance. Considering their responsiveness, conditions for maintaining the resonant state and conditions for matching the impedance were not met concurrently and it was difficult to match impedance in accordance with changes in the positional relationship of the power transmission coil and the power reception coil. Moreover, it was also difficult to match impedance in response to impedance changes in accordance with load fluctuations. Further, a power reception device having such an impedance matching function tends to be costly due to the necessity of high-performance elements or the like, and still further, if the power reception device is a mobile or a portable device, it was not practical for the power reception device to be equipped with a complex mechanism in view of weight, size, or heat generation or the like.

Further, in the wireless power feeding system described in Patent Literature 2, the impedance between the load side impedance and the input side impedance will be in a mismatched state during switching of the driver coils. Therefore, when it takes time to switch a plurality of driver coils, the power feeding speed may slow down in case the object of power supply is a battery at standstill. Also, when power is supplied to a moving object of power supply, switching of the plurality of driver coils cannot follow the movements of the object of power supply, resulting in a prolonged state of impedance mismatch, which may lead to early loss of power.

This gives rise to a technical problem to be solved in order to easily perform impedance matching even if the impedance of the load side circuit fluctuates, and it is an object of the present invention to solve this problem.

**Means for Solving the Problems**

For achieving the above object, the wireless power feeding system according to the present invention is a wireless power feeding system equipped with a power transmission device equipped with a power transmission-side resonance circuit including a power transmission coil, a power reception device equipped with a power reception unit that has a power reception-side resonance circuit including a power reception coil and that is connectable to a load to which power received by the power reception coil is supplied, and a controller that controls the power reception unit, which wireless power feeding system transmits and receives power between the power transmission coil and the power reception coil using a magnetic field resonance method, wherein the power reception coil is configured to be capable of selecting a plurality of coil regions that have different numbers of coil windings in accordance with connecting positions of a plurality of terminals provided at the power reception coil, and wherein the controller changes an inductance of the power reception coil by switching the plurality of terminals to mitigate a difference between a load side impedance, which is an impedance from an input end of the power transmission device to a circuit on the load side, and an input side impedance, which is an impedance from the input end of the power transmission device to a circuit on a power source device side.

Also, for achieving the above object, the wireless power feeding system according to the present invention is a wireless power feeding system equipped with a power source device equipped with an AC power source, a power transmission device that is connected to the power source device at an input end and that is equipped with a power transmission-side resonance circuit including a power transmission coil, a power reception device that is equipped with a power reception unit having a power reception-side resonance circuit including a power reception coil and that is connectable to a load to which power received by the power reception coil is supplied, and a controller that controls the power reception unit, which wireless power feeding system transmits and receives power between the power transmission coil and the power reception coil using the magnetic field resonance method, wherein the power reception coil is configured to be capable of selecting a plurality of coil regions that have different numbers of coil windings in accordance with connecting positions of a plurality of terminals provided at the power reception coil, and wherein the controller changes an inductance of the power reception coil by switching the plurality of terminals to mitigate a difference between a load side impedance, which is an impedance from an input end of the power transmission device to a circuit on the load side, and an input side impedance, which is an impedance from the input end of the power transmission device to a circuit on the power source device side, wherein the power transmission device is further equipped with a driving unit having a driver coil provided to be capable of magnetic field coupling with the power transmission coil to transmit power to the power transmission coil using the magnetic field resonance method, and wherein the controller controls the driving unit to change the coupling strength in magnetic field coupling of the power transmission coil and the driver coil.

Also, for achieving the above object, the wireless power feeding system according to the present invention is a wireless power feeding system equipped with a power transmission device equipped with a power transmission-side resonance circuit including a power transmission coil, a driving unit having a driver coil provided to be capable of magnetic field coupling with the power transmission coil to transmit power to the power transmission coil, and a reflected power detecting unit disposed between the power source device and the driver coil to detect reflected power at the driver coil, a power reception device equipped with a power reception unit that has a power reception-side resonance circuit including a power reception coil and that is connectable to a load to which power received by the power reception coil is supplied, and a controller that controls the driving unit, which wireless power feeding system transmits and receives power between the power transmission coil and the power reception coil using the magnetic field resonance method, wherein the driver coil is configured so that it can select a plurality of driver coil units to transmit power to the power transmission coil using the magnetic field resonance method, and wherein the controller switches, based on a preliminarily stored correspondence between a power reflection ratio or power reflection coefficient that is calculated from the reflected power and coupling strength in magnetic field coupling of the power transmission coil and the driver coil, the plurality of driver coil units in accordance with the power reflection ratio or power reflection coefficient to change the coupling strength in magnetic field coupling of the power transmission coil and the driver coil.

Also, for achieving the above object, the wireless power receiving system according to the present invention is a wireless power receiving system that receives power transmitted from a power transmission device equipped with a power transmission-side resonance circuit that includes a power transmission coil using the magnetic field resonance method, wherein the wireless power receiving system is equipped with a power reception unit having a power reception-side resonance circuit including a power reception coil and is connectable to a load to which power received by power reception coil is supplied, wherein the power reception coil is configured to be capable of selecting a plurality of coil regions that have different numbers of coil windings in accordance with connecting positions of a plurality of terminals provided at the power reception coil, and wherein a controller that controls the power reception unit changes an inductance of the power reception coil by switching the plurality of terminals to mitigate a difference between a load side impedance, which is an impedance from an input end of the power transmission device to a circuit on the load side, and an input side impedance, which is an impedance from the input end of the power transmission device to a circuit on a power source device side.

Further, for achieving the above object, the wireless power feeding method according to the present invention is a wireless power feeding method using a wireless power feeding system equipped with a power transmission device equipped with a power transmission-side resonance circuit that includes a power transmission coil, a power reception device that is equipped with a power reception unit having a power reception-side resonance circuit including a power reception coil and that is connectable to a load to which power received by the power reception coil is supplied, and a controller that controls the power reception unit, which wireless power feeding system transmits and receives power between the power transmission coil and the power reception coil using the magnetic field resonance method, wherein the power reception coil is configured to be capable of selecting a plurality of coil regions that have different numbers of coil windings in accordance with connecting positions of a plurality of terminals provided at the power reception coil, and wherein the controller changes an inductance of the power reception coil by switching the plurality of terminals and mitigates a difference between a load side impedance, which is an impedance from an input end of the power transmission device to a circuit on the load side, and an input side impedance, which is an impedance from the input end of the power transmission device to a circuit on a power source device side.

**Effects of the Invention**

According to the present invention, even in the case of fluctuations in the impedance of the load side circuit, the difference between the input side impedance and the load side impedance is mitigated by changing the strength and weakness of the coupling strength in magnetic field coupling (sparseness and density of magnetic field coupling) between the power transmission coil and the power reception coil, so that generation of reflected waves at the input end is restricted, making it possible to avoid lowering of power transmission efficiency and accompanying system failures.

**Brief Description of the Drawings**

FIG. 1 is a schematic view showing a configuration of the wireless power feeding system according to a first embodiment of the present invention;
FIG. 2 is a schematic view showing a configuration of a driver coil;
FIG. 3 is a schematic view showing a positional relationship of a power transmission coil and three driver coil units disposed offset in an axial direction of a coil axis;
FIG. 4 is a schematic view showing a configuration of a power reception coil;
FIG. 5 is a schematic view showing a positional relationship of a power transmission coil and three coil regions of the power reception coil;
FIG. 6 is a schematic view showing an electrical wiring of the power reception coil;
FIG. 7 is a circuit diagram that corresponds to the wireless power feeding system;
FIG. 8 is an equivalent circuit diagram that corresponds to the circuit diagram shown in FIG. 7;
FIG.9 is a schematic view showing a configuration of a first modified example of the wireless power feeding system according to the first embodiment;
FIG. 10 is a schematic view showing a configuration of a second modified example of the wireless power feeding system according to the first embodiment;
FIG. 11 is a schematic view showing a positional relationship between a power transmission coil and eight power feeding coil units inclining to the power transmission coil and being disposed in a substantially spherical shape;

FIG. 12 is a schematic view showing a configuration of the wireless power feeding system according to a second embodiment of the present invention;

FIG. 13 is a schematic view showing a configuration of the wireless power feeding system according to a third embodiment of the present invention;

FIG. 14 is a schematic view showing a configuration of a driver coil, a power transmission coil and a power reception coil used in Examples 1 to 2;

FIG.15 is a graph showing experimental results of Example 1;

FIG. 16 is a graph showing experimental results of Example 2;

FIG. 17 is a table showing combinations of a driver coil and a power reception coil at respective distances of a power transmission coil and the power reception coil with a load resistance set to 50 Ω in Example 2;

FIG. 18 is a table showing combinations of a driver coil and a power reception coil at respective distances of a power transmission coil and the power reception coil with a load resistance set to 200 Ω in Example 2;

FIG. 19 is a table showing combinations of a driver coil and a power reception coil at respective distances of a power transmission coil and the power reception coil with a load resistance set to 500 Ω in Example 2;

FIG. 20 is a graph showing power transmission efficiency in Example 2;

FIG. 21 is a graph showing experimental results of Example 3 with a load resistance set to 50 Ω;

FIG. 22 is a graph showing experimental results of Example 3 with a load resistance set to 500 Ω;

FIG. 23 is a graph showing experimental results of Example 3 with a load resistance set to 3079 Ω;

FIG. 24 is a table showing combinations of a driver coil and a power reception coil at respective distances of a power transmission coil and the power reception coil with a load resistance set to 50 Ω in Example 3;

FIG. 25 is a table showing combinations of a driver coil and a power reception coil at respective distances of a power transmission coil and the power reception coil with a load resistance set to 500 Ω in Example 3;

FIG. 26 is a table showing combinations of a driver coil and a power reception coil at respective distances of a power transmission coil and the power reception coil with a load resistance set to 3079 Ω in Example 3;

FIG. 27 is a schematic view showing configurations of a driver coil, a power transmission coil and a power reception coil used in Examples 4 to 11;

FIG. 28 is a graph showing transitions of the power reflection ratio in accordance with changes in the distance of the power transmission coil and the power reception coil in Example 4;

FIG. 29 is a graph showing switching timings of a driver coil unit of the driver coil and a coil region of the power reception coil in Example 4;

FIG. 30 is a graph showing transitions of power reflection ratio in accordance with changes in the distance of the power transmission coil and the power reception coil in Example 5;

FIG. 31 is a graph showing switching timings of a driver coil unit of the driver coil and a coil region of the power reception coil in Example 5;

FIG. 32 is a graph showing transitions of the power reflection ratio in accordance with changes in the distance of the power transmission coil and the power reception coil in Example 6;

FIG. 33 is a graph showing switching timings of a driver coil unit of the driver coil and a coil region of the power reception coil in Example 6;

FIG. 34 is a graph showing transitions of the power reflection ratio in accordance with changes in the distance of the power transmission coil and the power reception coil in Example 7;

FIG. 35 is a graph showing switching timings of a driver coil unit of the driver coil and a coil region of the power reception coil in Example 7;

FIG. 36 is a graph showing transitions of the power reflection ratio in accordance with changes in the distance of the power transmission coil and the power reception coil in Example 8;

FIG. 37 is a graph showing switching timings of a driver coil unit of the driver coil and a coil region of the power reception coil in Example 8;

FIG. 38 is a graph showing experimental results of Example 9;

FIG. 39 is a graph showing experimental results of Comparative Example 1;

FIG. 40 is a graph showing transitions of the power reflection ratio showing a first experimental result (stop time 43 minutes) in Example 10;

FIG. 41 is a graph showing transitions of the power reflection ratio showing a second experimental result (stop time 46 minutes) in Example;

FIG. 42 is a graph showing transitions of the power reflection ratio showing a third experimental result (stop time 48 minutes) in Example 10;

FIG. 43 is a graph showing transitions of the power reflection ratio showing a fourth experimental result (stop time 43 minutes) in Example 10;

[FIG. 44 is a graph showing transitions of the power reflection ratio showing a first experimental result (stop time 36 minutes) in Comparative Example 2;

FIG. 45 is a graph showing transitions of the power reflection ratio showing a second experimental result (stop time 41 minutes) in Comparative Example 2;

FIG. 46 is a graph showing transitions of the power reflection ratio showing a third experimental result (stop time 33 minutes) in Comparative Example 2;

FIG. 47 is a graph showing transition of the power reflection ratio showing a fourth experimental result (stop time 33 minutes) in Comparative Example 2; and

FIG. 48 is a graph showing transitions of the power reflection ratio in accordance with changes in the distance of the power transmission coil and the power reception coil in Example 11.

## Detailed Description of the Preferred Embodiments

A wireless power feeding system 1A and a wireless power feeding method using the wireless power feeding system 1A according to one embodiment of the present invention will be explained based on the drawings. It should be noted that in the following, when reference is made to numbers, numeric values, quantities, or ranges of components or the like, it does not mean that the specific numbers are limitative unless specifically indicated otherwise and unless the specific numbers are clearly limitative by principle, and numbers can be larger or smaller than the specific numbers.

Further, when reference is made to shapes or positional relationships of components or the like, those substantially similar to or approximating the shapes or the like are to be included unless specifically indicated otherwise and unless it can be clearly considered by principle that they do or are not.

Further, drawings may be exaggerated by, for instance, enlarging characteristic parts or the like for ease of understanding features, and dimensional proportions or the like of components may not be identical to actual ones. Further, in cross-sectional views, hatchings of some components may be omitted for ease of understanding sectional configurations of components.

<Configuration of the Wireless Power feeding System>

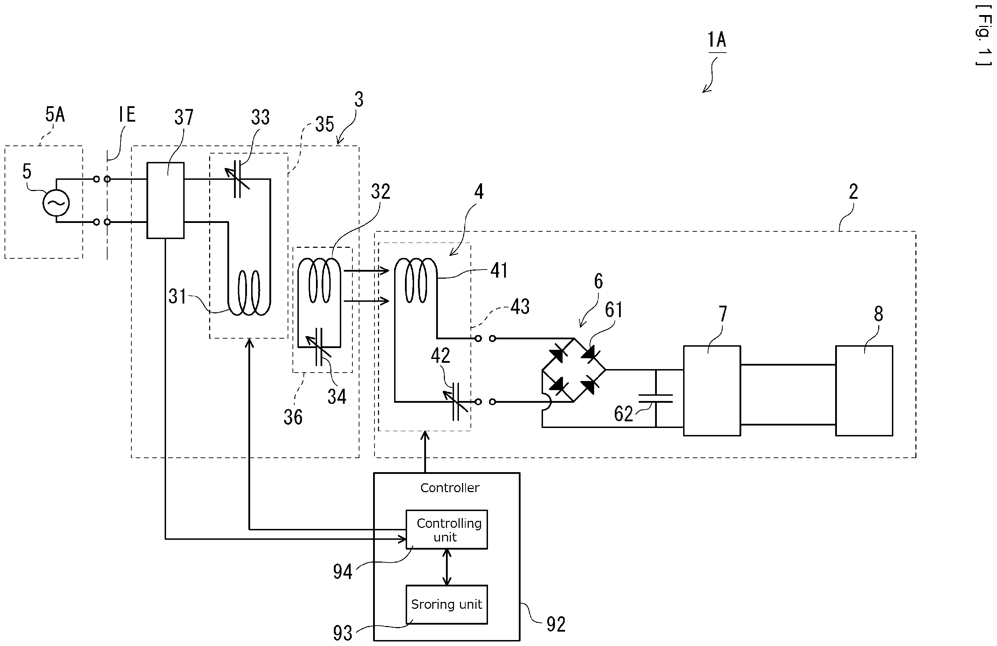

FIG. 1 is a schematic view showing a configuration of the wireless power feeding system 1A. The wireless power feeding system 1A supplies power to an object of power supply 2 in a contactless manner using magnetic resonance. The object of power supply 2 is, for instance, a vehicle, a robotic flying object, an underwater robot, a capsule endoscope, a cardiac pacemaker, and may be any other movable or immovable device. Further, the object of power supply 2 may be either moving or at a standstill at the time of power supply. The wireless power feeding system 1A is equipped with a power transmission device 3 and a power reception device 4. The wireless power feeding system 1A may also be equipped with a power source device 5A equipped with an AC power source 5.

<Configuration of the Power transmission device>

The power transmission device 3 is equipped with a driver coil 31, a power transmission coil 32, and capacitors 33 and 34.

The driver coil 31 and the power transmission coil 32 are formed by winding a copper wire or the like with high electric conductivity into a circular shape. It should be noted that more current flowing in the copper wire flows near the surface than at a central portion of the copper wire due to effects of internal resistance. Accordingly, when a Litz wire, which is obtained by twisting a plurality of copper wires, is used as a wire material for the driver coil 31 and the power transmission coil 32, the surface area of the Litz wire becomes larger than that of a single copper wire of the same diameter, enabling more current to flow and to suppress current loss.

AC power is supplied to the driver coil 31 from the AC power source 5 of the power source device 5A. While the AC power is, for instance, set to have a frequency of 150 kHz and a voltage of 10 V, the frequency and voltage of the AC power source 5 can be arbitrarily changed. Hereinafter, a contact on the AC power source 5 side of the driver coil 31 is referred to as "input end IE". It should be noted that although the present embodiment will be explained based on an example in which the driver coil 31 and the AC power source 5 are directly connected via the input end IE, the driver coil 31 and the AC power source 5 may be either directly connected via the input end IE or indirectly connected via a coaxial cable or the like provided between the AC power source 5 and the input end IE. In this case, if an impedance of the power source matches with an impedance of the coaxial cable or the like, no problems are caused since no reflection of power or the like occurs on the power source side of the coaxial cable or the like, and the input end IE denotes a load side end of the coaxial cable or the like.

A driving unit 35 has a power feeding side resonance circuit configured by connecting the driver coil 31 and the capacitor 33 in series. When an AC voltage that has a frequency according to a resonance frequency to be set by an inductance of the driver coil 31 and a capacitance of the capacitor 33 flows in the driver coil 31, an oscillating field is generated to penetrate the driver coil 31. Detailed configurations of the driver coil 31 will be described later.

The driver coil 31 and the power transmission coil 32 are magnetically coupled, and the driver coil 31 supplies power to the power transmission coil 32 by the magnetic field resonance method. That is, a resonance frequency to be set in accordance with an inductance of the driver coil 31 and a capacitance of the capacitor 33 and a resonance frequency to be set in accordance with an inductance of the power transmission coil 32 and a capacitance of a capacitor 34 are substantially identical, and the driver coil 31 and the power transmission coil 32 are designed to resonate. With this arrangement, oscillation of a magnetic field of a specific frequency (resonance frequency) generated by AC current flowing in the driver coil 31 is transmitted to the power transmission coil 32 to resonate at the same specific frequency, so that electromotive force is generated at the power transmission coil 32. It should be noted that although it is favorable to supply power from the driver coil 31 to the power transmission coil 32 by the magnetic field resonance method, which reduces effects of the positional relationship of each coil, it is also possible to use the electromagnetic coupling method in which, when AC current flows in the driver coil 31, electromotive force is generated also at the power transmission coil 32 using a magnetic flux that is generated so as to penetrate the driver coil 31 in a coil axial direction. It is also possible to combine the magnetic field resonance method and the electromagnetic coupling method.

A power transmitting unit 36 has a power transmission-side resonance circuit configured by connecting the power transmission coil 32 and the capacitor 34 in series. When an AC voltage that has a frequency according to a resonance frequency to be set by an inductance of the power transmission coil 32 and a capacitance of the capacitor 33 flows in the power transmission coil 32, a power reception coil 41 (to be described later) resonates to generate electromotive force.

A reflected power detecting unit 37 composed of a directional coupler is provided between the AC power source 5 and the driver coil 31. The reflected power detecting unit 37 detects reflected power from the driver coil 31 side.

<Configuration of the Power reception device>

The power reception device 4 is provided in the object of power supply 2. The power reception device 4 is equipped with a power reception coil 41 and a capacitor 42.

The power reception coil 41 is spaced apart from the power transmission coil 32 in a coil axial direction. The power reception coil 41 is formed by winding a copper wire or the like with high electric conductivity into a circular shape. It should be noted that it is preferable to use a Litz wire as a wire material also for the power reception coil 41, similarly to the driver coil 31 and the power transmission coil 32.

A power reception unit 43 has a power reception-side resonance circuit configured by connecting the power reception coil 41 and the capacitor 42 in series. A resonance frequency set by an inductance of the power reception coil 41 and a capacitance of the capacitor 42 is set to be substantially identical to a resonance frequency of the power transmission coil 32 and the capacitor 33. By this, an induced current flows in the power reception coil 41 by oscillation of a magnetic field generated so as to penetrate the power transmission coil 32 in a coil axial direction, and an oscillating field is generated so as to penetrate the power reception coil 41 in a coil axial direction. At this time, the magnetic fields of the power transmission coil 32 and the power reception coil 41 resonate and firmly couple. Detailed configurations of the power reception coil 41 will be described later.

AC power resonantly received by the power reception coil 41 is supplied to a load 8 via a rectifying circuit (AC-DC converter) 6 and a DC-DC converter 7. The load 8 is a motor, a battery, or the like that composes the object of power supply 2.

In the rectifying circuit 6, four diodes 61 are disposed on a bridge and perform full-wave rectification of AC power received by the power reception coil 41 to output DC voltage. It should be noted that reference number 62 refers to a capacitor that smooths the DC voltage output by the rectifying circuit 6.

The DC-DC converter 7 converts the rectified DC voltage to a preliminarily set constant voltage (e.g., 12 V). The voltage output from the DC-DC converter 7 is applied to the load 8. It should be noted that the DC-DC converter 7 is enough to be disposed in accordance with a required voltage, and may also be omitted as appropriate.

<Configuration of Impedance Matching Mechanism>

An impedance matching mechanism 9 that performs impedance matching processes of mitigating a difference between an impedance from the input end IE to the power reception device 4 side, that is, a circuit that includes the power transmission device 3, the power reception device 4, the rectifying circuit 6, the DC-DC converter 7, and the load 8 (load side circuit) (hereinafter referred to as "load side impedance") and an impedance from the input end IE to the AC power source side circuit (hereinafter referred to as "input side impedance") will be explained based on the drawings. It should be noted that the power reception device 4 and the impedance matching mechanism 9 compose a wireless power receiving system 11.

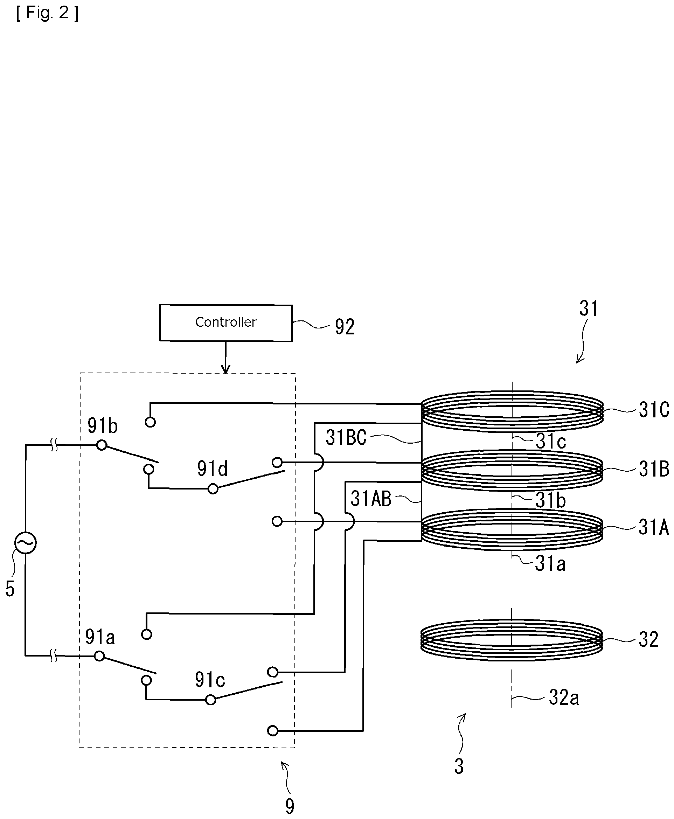

As shown in FIG. 2, the impedance matching mechanism 9 supplies power to at least one of three driver coil units 31A, 31B, 31C that compose the driver coil 31 by switch controlling switches 91a to 91d. It should be noted that other configurations may be employed instead of the switches 91a to 91d as long as it is possible to selectively supply power to any of the driver coil units 31A, 31B, 31C.

The driver coil 31 is divided into three driver coil units 31A, 31B, 31C. The three driver coil units 31A, 31B, 31C divide the driver coil 31 into three and are substantially connected in series, wherein the driver coil units 31A, 31B are connected via a wiring 31AB while the driver coil units 31B, 31C are connected via a wiring 31BC. It should be noted that the wirings 31AB, 31BC may be omitted and the driver coil units 31A, 31B, 31C may be configured so that each of them has a different driver coil. Coil axes 31a, 31b, 31c of the driver coil units 31A, 31B, 31C and a coil axis 32a of the power transmission coil 32 are positioned substantially coaxially in a normal state. It should be noted that although an example will be explained in the following in which the driver coil 31 is divided into three driver coil units 31A, 31B, 31C, the number of driver coil units may be two or may be four or more.

The driver coil units 31A, 31B, 31C are disposed such that the driver coil unit 31A is closest to the power transmission coil 32 and separate from the power transmission coil 32 in this order. Therefore, the coupling strength in magnetic field coupling with the power transmission coil 32 is set to be strongest for the driver coil unit 31A and smallest for the driver coil unit 31C. When transmitting power between the driver coil 31 and the power transmission coil 32 using the magnetic field resonance method, it is possible to effectively transmit power by setting inductances of the driver coil units 31A, 31B, 31C to be respectively equal.

The switches 91a to 91d are switches composed of MOSFET and the like that supply current to the driver coil units 31A, 31B, 31C. The switches 91a and 91b are connected to the AC power source 5. The switch 91a is configured to be switchable between one end side of the driver coil unit 31C and the switch 91c side. The switch 91c is configured to be switchable between one end side of the driver coil unit 31A and one end side of the driver coil unit 31B. Moreover, the switch 91b is configured to be switchable between the other end side of the driver coil unit 31C and the switch 91d side. The switch 91d is configured to be switchable between the other end side of the driver coil unit 31A and the other end side of the driver coil unit 31B.

When supplying power to the driver coil unit 31A, the switch 91a is switched to the switch 91c side, the switch 91c to the one end side of the driver coil unit 31A, the switch 91b to the switch 91d side, and the switch 91d to the other end side of the driver coil unit 31A. Also, when supplying power to the driver coil unit 31B, the switch 91a is switched to the switch 91c side, the switch 91c to the one end side of the driver coil unit 31B, the switch 91b to the switch 91d side, and the switch 91d to the other end side of the driver coil unit 31B. Further, when supplying power to the driver coil unit 31C, the switch 91a is switched to the driver coil unit 31C side, and the switch 91b to the driver coil unit 31C side.

Also, when supplying power to the driver coil units 31A, 31B, the switch 91a is switched to the switch 91c side, the switch 91c to the one end side of the driver coil unit 31A, the switch 91b to the switch 91d side, and the switch 91d to the other end side of the driver coil unit 31B. For supplying power to the driver coil units 31B, 31C, the switch 91a is switched to the switch 91c side, the switch 91c to the one end side of the driver coil unit 31B, and the switch 91b to the driver coil unit 31C side.

Further, when supplying power to the driver coil units 31A, 31B, 31C, the switch 91a is switched to the switch 91c side, the switch 91c to the one end side of the driver coil unit 31A, and the switch 91b to the driver coil unit 31B side.

A controller 92 performs switch control of the switches 91a to 91d in accordance with the magnitude of the reflected power detected by the reflected power detecting unit 37. The controller 92 may, for instance, be composed of a CPU, a memory, and the like. It should be noted that functions of the controller 92 may be realized through control using software or through operation using hardware. The controller 92 is functionally divided into a storing unit 93 and a controlling unit 94 (see FIG. 1).

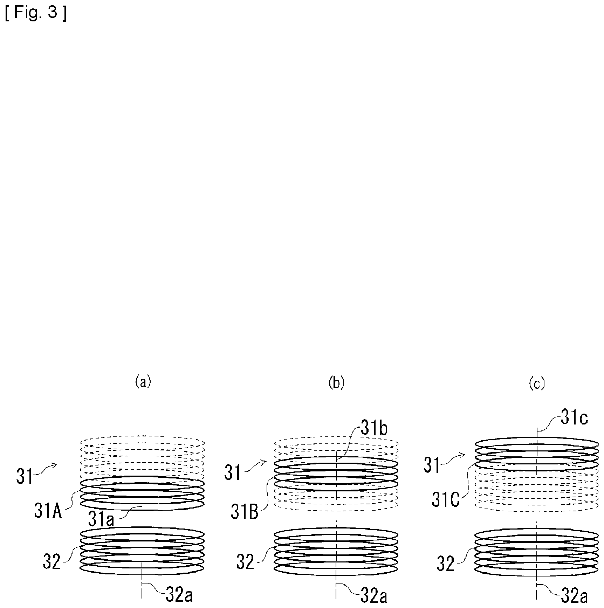

Since the coupling strength in magnetic field coupling of the driver coil units 31A, 31B, 31C and the power transmission coil 32 weakens inversely proportional to the distance of the driver coil units 31A, 31B, 31C to the power transmission coil 32, it is possible to increase or decrease an impedance of a circuit in the power transmission device 3 by supplying power to any of the driver coil units 31A, 31B, 31C that have different bonding strengths of magnetic field coupling with the power transmission coil 32 as shown in FIG. 3.

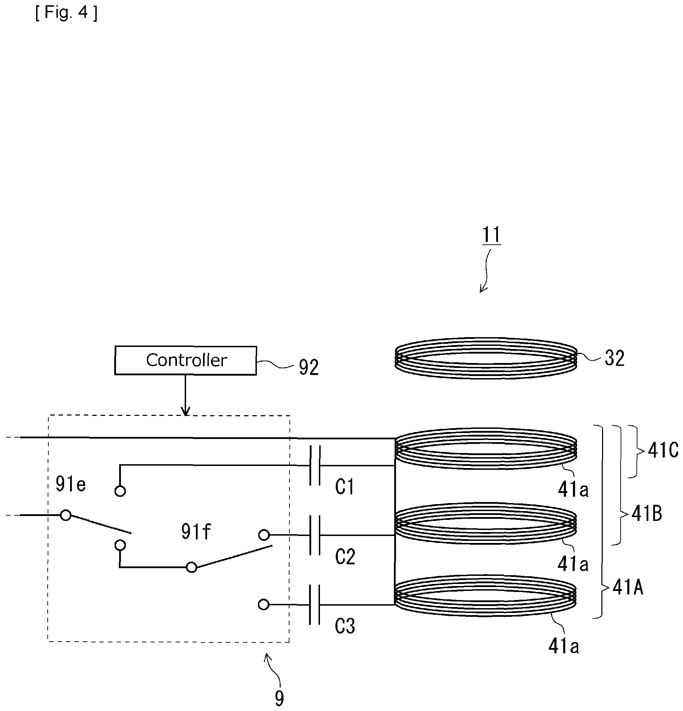

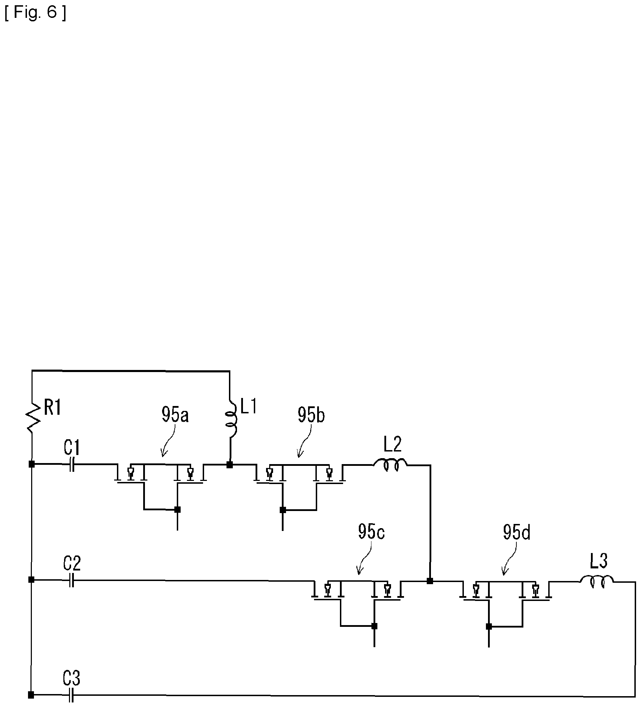

Also, as shown in FIG. 4, the impedance matching mechanism 9 selects which of the three coil regions 41A, 41B, 41C of the power reception coil 41 power is to be energized by switch controlling switches 91e to 91f connected to a terminal on the one end side of the power reception coil 41 and two terminals respectively provided between three power reception coil units 41a obtained by dividing the power reception coil 41 into substantially identical number of coil windings and substantially connecting them in series. It should be noted that the terminal on the other end of the power reception coil 41 and the switch 91e are connected to the rectifying circuit 6. Switch control of the switches 91e to 91f is performed by the controller 92 in accordance with the magnitude of reflected power detected by the reflected power detecting unit 37. It should be noted that capacitances C1, C2, C3 of the capacitor 42 correspond to capacitances C1, C2, C3 of FIG. 6 to be described later. It should be noted that other configurations may be employed instead of the switches 91e to 91f as long as it is possible to select any of the coil regions 41A, 41B, 41C. Moreover, in the following, although an example will be explained in which the power reception coil 41 is divided into three coil regions 41A, 41B, 41C, the number of coil regions may be two, or may be four or more.

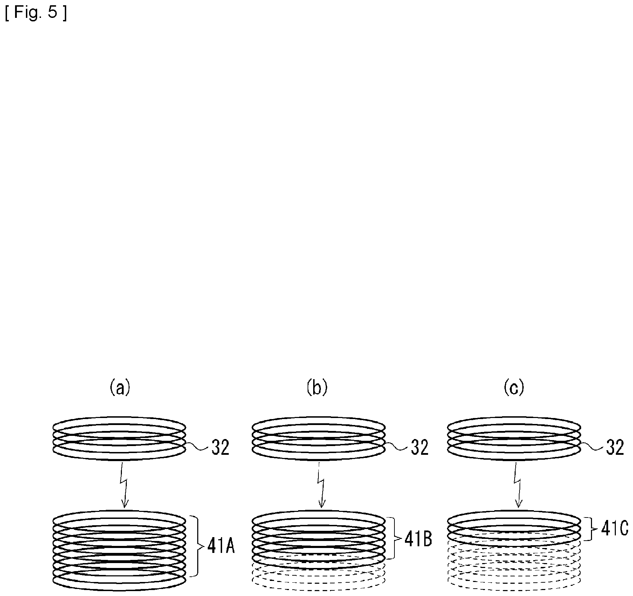

FIG. 5 is a schematic view showing situations in which a part or all of the power reception coils 41 is/are selectively used. FIG. 5(a) shows a case that uses the coil region 41A that corresponds to the number of total coil windings of the power reception coil 41, FIG. 5(b) shows a case that uses the coil region 41B of the power reception coil 41 that is close to the power transmission coil 32 and corresponds to 2/3 of the number of total coil windings, and FIG. 5(c) shows a case that uses the coil region 41C of the power reception coil 41 that is close to the power transmission coil 32 and corresponds to 1/3 of the number of total coil windings. Since an inductance of the power reception coil 41 increases proportional to the number of coil windings of the coil regions 41A, 41B, 41C, the inductance of the coil region 41A is largest, while the inductance of the coil region 41B is 2/3 of that of the coil region 41A and the inductance of the coil region 41C is 1/3 of that of the coil region 41A.

In order to maintain the resonant state between the power reception coil 41 and the power transmission coil 32, the capacitance of the capacitor 42 is suitably adjusted in accordance with the selected coil region 41A, 41B, 41C. FIG. 6 is a schematic view showing an electrical wiring of the power reception coil 41. For ease of understanding, the three power reception coil units are shown as to be separated from each other in FIG. 6, the three power reception coil units do not necessarily be separated.

Two MOSFETs 95a, 95b compose the switch 91e, and two MOSFETs 95c, 95d compose the switch 91f. When using the coil region 41A that has an inductance $(L1 + L2 + L3)$, it is possible to select the coil region 41A by switching the MOSFET 95a OFF, the MOSFET 95b ON, the MOSFET 95c OFF, and the MOSFET 95d ON. At this time, the capacitance C3 of the capacitor 42 functions. The value of the capacitance C3 is preliminarily set to one that forms a resonance circuit with the inductance $(L1 + L2 + L3)$.

Also, when using the coil region 41B that has an inductance $(L1 + L2)$, it is possible to select the coil region 41B by switching the MOSFET 95a OFF, the MOSFET 95b ON, the MOSFET 95c ON, and the MOSFET 95d OFF. At this time, the capacitance C2 of the capacitor 42 functions. The value of the capacitance C2 is preliminarily set to one that forms a resonance circuit with the inductance $(L1 + L2)$.

Also, when using the coil region 41C that has an inductance $(L1)$, it is possible to select the coil region 41C by switching the MOSFET 95a ON, the MOSFET 95b OFF (the MOSFETs 95c, 95d may be either ON or OFF). At this time, the capacitance C1 of the capacitor 42 functions. The value of the capacitance C1 is preliminarily set to one that forms a resonance circuit with the inductance L1.

The controller 92 performs switch control of the switches 91a to 91d in accordance with the magnitude of reflected power detected by the reflected power detecting unit 37. By this, a resonant state of the power reception coil 41 and the power transmission coil 32 is maintained no matter which of the coil regions 41A, 41B, 41C is selected. It should be noted that although the present embodiment uses the switch 91e composed of MOSFETs 95a, 95b and the switch 91f composed of MOSFETs 95c, 95d, configurations of the switches 91e, 91f are not limited thereto.

Next, factors causing impedance mismatch, a state in which an input side impedance and a load side impedance do not match, will be explained. The larger the difference between the input side impedance and the load side impedance is, the greater the reflection of power becomes, causing lowering of power transmission efficiency. An impedance mismatch is caused, for instance, by changes in the coupling coefficient of the power transmission coil 32 and the power reception coil 41 caused by changes in the relative position between the power transmission coil 32 and the power reception coil 41 or by the presence of a foreign matter between the power transmission coil 32 and the power reception coil 41, or by fluctuations in the load side impedance due to changes in the state of the load 8 caused by the charging status of the battery or the like.

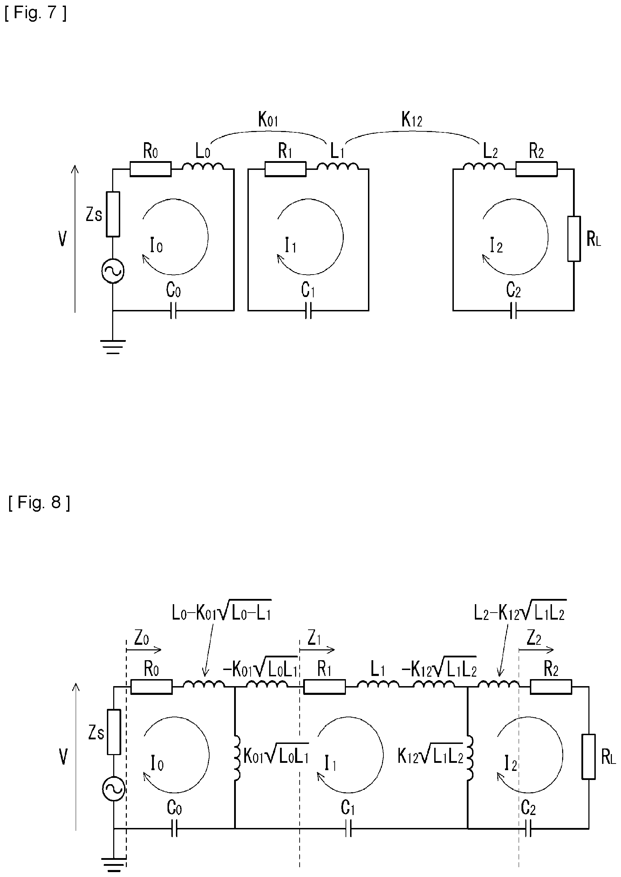

The impedance mismatch will be explained in detail based on FIG. 7 and FIG. 8. FIG. 7 is a circuit diagram that corresponds to the wireless power feeding system 1A. In FIG. 7, "V" denotes a voltage of the power source 5, "$Z_s$" an impedance of the power source 5 (input side impedance), "$R_0$" a parasitic resistance of the driver coil 31, "$L_0$" an inductance of the driver coil 31, "$C_0$" a capacitance of capacitor 33, "$I_0$" a current flowing in the driver coil 31, "$R_1$" a parasitic resistance of the power transmission coil 32, "$L_1$" an inductance of the power transmission coil 32, "$C_1$" a capacitance of the capacitor 34, "$I_1$" a current flowing in the power transmission coil 32, "$k_{01}$" a coupling coefficient of the driver coil 31 and the power transmission coil 32, "$R_2$" a parasitic resistance of the power reception coil 41, "$R_L$" a load resistance of the load 8, "$L_2$" an inductance of the power reception coil 41, "$C_2$" a capacitance of the capacitor 42, "$I_2$" a current flowing in the power reception coil 41, and "$k_{12}$" a coupling coefficient of the power transmission coil 32 and the power reception coil 41.

FIG. 8 is an equivalent circuit diagram based on the circuit diagram shown in FIG. 7. The equivalent circuit diagram shown in FIG. 8 shows a state in which the driver coil 31 and the power transmission coil 32 resonate and in which the power transmission coil 32 and the power reception coil 41 resonate. A mutual inductance $M_{01}$ between the driver coil 31 and the power transmission coil 32 is $k_{01}\sqrt{(L_0 L_1)}$, and a mutual inductance $M_{12}$ between the power transmission coil 32 and the power reception coil 41 is $k_{12}\sqrt{(L_1 L_2)}$. "$Z_0$" in FIG. 8 is an impedance from between the power source 5 and the driver coil 31, that is, the input end IE of the power transmission device 3 to the load 8 side circuit (load side impedance). "$Z_1$" is an impedance from between the driver coil 31 and the power transmission coil 32 to the load 8 side

circuit. "$Z_2$" is an impedance from the power reception coil 41 to the load 8 side circuit. The following Equation 1 to Equation 3 can be obtained from the equivalent circuit shown in FIG.8.

[Equation1]

$$Z_2 = R_2 + R_L \qquad (1)$$

[Equation 2]

$$Z_1 = R_1 + \frac{\left(\omega k_{12}\sqrt{L_1 L_2}\right)^2}{Z_2} \qquad (2)$$

[Equation 3]

$$Z_0 = R_0 + \frac{\left(\omega k_{01}\sqrt{L_0 L_1}\right)^2}{Z_1} \qquad (3)$$

Further, while, for instance, the closer the power transmission coil 32 and the power reception coil 41 come, the larger the coupling coefficient "$k_{12}$" between the power transmission coil 32 and the power reception coil 41 will be, it can be seen from Equation 2 that the impedance "$Z_1$" becomes larger and from Equation 3 that the impedance "$Z_0$" becomes smaller.

Therefore, the impedance matching mechanism 9 reduces the inductance "$L_2$" of the power reception coil 41 the larger the coupling coefficient "$k_{12}$" becomes. By this, increases in impedance "$Z_1$" and reductions in impedance "$Z_0$" are restricted, so that impedance matching can be maintained.

Specifically, the reflected power detecting unit 37 detects reflected power from the driver coil 31 side, and the controller 92 monitors whether the impedance "$Z_0$" has fallen below a specified threshold. That is, whether or not the power transmission coil 32 and the power reception coil 41 have come closer than a specified distance is monitored by the magnitude of reflected power.

When the impedance "$Z_0$" falls below a specified threshold, the controller 92 selects one of the coil regions 41A, 41B, 41C by switching the switches 91e to 91f shown in FIG. 4 to change the inductance "$L_2$" of the power reception coil 41.

Also, in addition to the change of the inductance "$L_2$" of the power reception coil 41, the coupling coefficient "$k_{01}$" of the driver coil 31 and the power transmission coil 32 may be changed. That is, when the impedance "$Z_0$" falls below a specified threshold, the controlling unit 94 may control the power reception unit 43 and the driving unit 35. Specifically, it is possible to further restrict reductions in the impedance "$Z_0$" by reducing the inductance "$L_2$" of the power reception coil 41 and increasing the coupling coefficient "$k_{01}$" of the driver coil 31 and the power transmission coil 32. By this, it is possible to cope with even longer distance changes of the power transmission coil 32 and the power reception coil 41.

Further, adjustment of the load side impedance "$Z_0$" by the controlling unit 94 may also be performed in a procedure of first performing the above-described adjustment (rough adjustment) of the inductance "$L_2$" of the power reception coil 41 by selecting a coil area 41A, 41B, 41C, then selecting a driver coil unit 31A, 31B, 31C by switching the switches 91a to 91d shown in FIG. 2, and performing adjustment (fine adjustment) of the coupling coefficient "$k_{01}$" of the driver coil 31 and the power transmission coil 32.

Next, a procedure in which the controller 92 selects any of the coil areas 41A, 41B, 41C by switching the switches 91e to 91f in accordance with changes in the reflected power detected by the reflected power detecting unit 37 will be explained.

First, the reflected power detecting unit 37 detects a traveling wave voltage $V_F$ and a reflected wave voltage $V_R$. By this, it is possible to calculate a voltage reflection coefficient ($\Gamma$) and a power reflection ratio "S" based on the following Equation 4 and Equation 5.

[Equation 4]

$$\Gamma = \frac{V_R}{V_F} \qquad (4)$$

[Equation 5]

$$S = \Gamma^2 \qquad (5)$$

Also, a theoretical value ($\Gamma$ ref) of a voltage reflection coefficient ($\Gamma$) can be expressed by the following Equation

6.
[Equation 6]

$$\Gamma_{ref} = \frac{Z_0 + Z_S}{Z_0 + Z_S} \qquad (6)$$

According to Equations 4, 6, a load side impedance "$Z_0$" can be expressed by the following Equation 7. It should be noted that "$Z_s$" in Equation 7 is a power source side impedance, which is a preliminarily set fixed value. According to Equation 7, an actual value of the load side impedance "$Z_0$" is calculated based on the traveling wave voltage $V_F$ and the reflected wave voltage $V_R$ detected by the reflected power detecting unit 37.
[Equation 7]

$$Z_0 = -\frac{V_R + V_F}{V_R - V_F} Z_S \qquad (7)$$

Next, a first switching method of the power reception coil 41 by the controller 92 will be explained. In the first switching method, the traveling wave voltage $V_F$ and the reflected wave voltage $V_R$ are measured again, and when, for instance, the voltage reflection coefficient ($\Gamma$) or the reflection ratio "S" is larger than a predetermined value (for instance, when the reflection ratio "S" is 5% or more), the actual value of the load side impedance "$Z_0$" obtained from Equation 7 and a theoretical value of the load side impedance "$Z_0$" shown in Equation 8 derived from Equations 2, 3 are compared, and an optimum inductance "$L_2$" for the power reception coil 41 is calculated so as to bring the theoretical value of the load side impedance "$Z_0$" closer to the actual value of the load side impedance "$Z_0$", whereupon the controller 92 selects any of the coil regions 41A, 41B, 41C that corresponds to the calculated inductance "$L_2$" of the power reception coil 41 by switching the switches 91e to 91f.
[Equation 8]

$$Z_0 = R_0 + \frac{\left(\omega k_{01}\sqrt{L_0 L_1}\right)^2}{R_1 + \frac{\left(\omega k_{12}\sqrt{L_1 L_2}\right)^2}{R_2 + R_L}} \cong R_0 + \alpha\left(\frac{R_1}{L_2} + \beta\frac{k_{12}^2}{R_L}\right)^{-1}\left(\frac{k_{01}^2}{L_2}\right) \qquad (8)$$

It should be noted that in Equation 8, changes in the coupling coefficient "$k_{01}$" of the driver coil 31 and the power transmission coil 32 and the coupling coefficient "$k_{01}$" of the power transmission coil 32 and the power reception coil 41 accompanying switching of the power reception coil 41 are minute and can be ignored when calculating the inductance "$L_2$" of the power reception coil 41. Moreover, $\alpha$ and $\beta$ in Equation 8 are constants.

That is, in the first switching method of the power reception coil 41, the traveling wave voltage $V_F$ and the reflected wave voltage $V_R$ are measured, the actual value of the load side impedance "$Z_0$" is obtained from Equation 7, the inductance "$L_2$" of the power reception coil 41 is calculated so that the difference between theoretical value of the load side impedance "$Z_0$" and the actual value of the load side impedance "$Z_0$" becomes smallest, whereupon the coil regions 41A, 41B, 41C of the power reception coil 41 are switched.

Also, after switching the power reception coil 41, the traveling wave voltage $V_F$ and the reflected wave voltage $V_R$ are measured again, and when, for instance, the voltage reflection coefficient ($\Gamma$) or the reflection ratio "S" is larger than a predetermined value (for instance, when the reflection ratio "S" is 5% or more), the inductance "$L_2$" of the power reception coil 41 may be readjusted by switching the power reception coil 41 again so that the difference between theoretical value of the load side impedance "$Z_0$" and the actual value of the load side impedance "$Z_0$" becomes smallest until the voltage reflection coefficient ($\Gamma$) or the reflection ratio "S" becomes a predetermined value or less.

Next, a second switching method of the power reception coil 41 by the controller 92 will be explained. In the second switching method, the controller 92 calculates the voltage reflection coefficient ($\Gamma$) or the power reflection ratio "S" from the actually measured traveling wave voltage $V_F$ and the reflected wave voltage $V_R$ based on Equations 4, 5. Then, the controller 92 switches the switches 91e to 91f so as to realize a coil region 41A, 41B, 41C of the power reception coil 41 that corresponds to the calculated voltage reflection coefficient ($\Gamma$) or the power reflection ratio "S" based on a preliminarily stored correspondence between the voltage reflection coefficient ($\Gamma$) or the power reflection ratio "S" and the coil region 41A, 41B, 41C of the power reception coil 41 with which the inductance "$L_2$" of the power reception coil 41 becomes optimal at that time.

Next, a third switching method of the power reception coil 41 by the controller 92 will be explained. In the third switching method, the changing status of the actually measured voltage reflection coefficient ($\Gamma$) is monitored, and when the voltage reflection coefficient ($\Gamma$) becomes a predetermined value (for instance, +0.22) or more and the power reflection ratio "S" becomes a predetermined value or more (for instance, when the power reflection ratio "S" is 5% or more), the coil region 41A, 41B, 41C of the power reception coil 41 is switched by one stage so that the inductance "$L_2$" of the power

reception coil 41 increases by one stage. That is, to switch the coil region 41A, 41B, 41C of the power reception coil 41, the coil region 41C is switched to the coil region 41B, and the coil region 41B to the coil region 1A by one stage. Also, after switching the coil region 41A, 41B, 41C, the power reflection ratio "S" is calculated again based on the traveling wave voltage $V_F$ and the reflected wave voltage $V_R$, and this is repeated until the power reflection ratio "S" becomes a specific value or more.

On the other hand, when the voltage reflection coefficient ($\Gamma$) is a predetermined value (for instance, -0.22) or more and the power reflection ratio "S" becomes a predetermined value or more (for instance, when the power reflection ratio "S" is 5% or more), the coil region 41A, 41B, 41C of the power reception coil 41 is switched by one stage so that the inductance "$L_2$" of the power reception coil 41 reduces by one stage. That is, to switch the coil region 41A, 41B, 41C of the power reception coil 41, the coil region 41A is switched to the coil region 41B, and the coil region 41B is switched to the coil region 1C by one stage. Further, after switching the coil region 41A, 41B, 41C, the power reflection ratio "S" is calculated again based on the traveling wave voltage $V_F$ and the reflected wave voltage $V_R$, and this is repeated until the power reflection ratio "S" becomes a specific value or more.

Further, adjustment of the load side impedance "$Z_0$" by the controlling unit 94 may also be performed in a procedure of first performing the above-described adjustment (rough adjustment) of the inductance "$L_2$" of the power reception coil 41 by selecting the coil area 41A, 41B, 41C, then selecting the driver coil unit 31A, 31B, 31C by switching the switches 91a to 91d shown in FIG. 2, and performing adjustment (fine adjustment) of the coupling coefficient "$k_{01}$" of the driver coil 31 and the power transmission coil 32. In this case, the inductance "$L_2$" of the power reception coil 41 and the coupling coefficient "$k_{01}$" of the driver coil 31 and the power transmission coil 32 can be changed, so that a more highly precise and wider ranged impedance adjustment is possible.

That is, in the case of the above-described first switching method, the traveling wave voltage $V_F$ and the reflected wave voltage $V_R$ are measured from the actually measured traveling wave voltage $V_F$ and the reflected wave voltage $V_R$, and, for instance, when the reflection ratio "S" is a predetermined value or more (for instance, when the reflection ratio "S" is 5% or more), the actual value of the load side impedance "$Z_0$" is obtained based on Equation 7, and the inductance "$L_2$" of the power reception coil 41 and the coupling coefficient "$k_{01}$" of the driver coil 31 and the power transmission coil 32 are calculated so that the difference between theoretical value of the load side impedance "$Z_0$" calculated based on Equation 8 and the actual value of the load side impedance "$Z_0$" becomes smallest. Then, the driver coil unit 31A, 31B, 31C and the coil region 41A, 41B, 41C that are closest to the calculated inductance "$L_2$" and the coupling coefficient "$k_{01}$" are selected to perform switching of the driver coil 31 and switching of the power reception coil 41.

Also, the actual power reflection ratio "S" can be obtained from Equation 5 by measuring the traveling wave voltage $V_F$ and the reflected wave voltage $V_R$ again after switching the power reception coil 41 once, and if the power reflection ratio "S" is a predetermined value or more (for instance, 5% or more), the power reception coil 41 or the driver coil 31 can be switched for until it becomes a predetermined value or less to fine adjust the power reflection ratio "S". It should be noted that the necessity of switching the power reception coil 41 or the driver coil 31 may be determined by using the power reflection coefficient ($\Gamma$) instead of the power reflection ratio "S". Also, the order of switching the power reception coil 41 or the driver coil 31 can be arbitrarily changed.

Also, in the case of the above-described second switching method, it is sufficient to preliminarily store a table of the like in which the correspondences between the power reflection ratio "S" or the power reflection coefficient ($\Gamma$)" and the optimal inductance "$L_2$" of the power reception coil 41 and the coupling coefficient "$k_{01}$" of the driver coil 31 and the power transmission coil 32 are defined.

Also, in the case of the above-described third switching method, the power reflection ratio "S" is adjusted to become a predetermined value or less by sequentially switching the coil region 41A, 41B, 41C of the power reception coil 41 to gradually change the inductance "$L_2$" and by sequentially switching the driver coil units 31A, 31B, 31C of the driver coil 31 to change the coupling coefficient "$k_{01}$". To switch the driver coil units 31A, 31B, 31C of the driver coil 31, the driver coil units 31A, 31B, 31C are switched by one stage, that is, from the driver coil unit 31A to the driver coil unit 31B, from the driver coil unit 31B to the driver coil units 31A, 31C, and from the driver coil unit 31C to the driver coil unit 31B.

Further, the power reflection ratio "S" is obtained again from values of the traveling wave voltage $V_F$ and the reflected wave voltage $V_R$ after switching the driver coil unit 31A, 31B, 31C of the driver coil 31 and the coil region 41A, 41B, 41C of the power reception coil 41 and this is repeated until the power reflection ratio "S" becomes a predetermined value or more. In this manner, impedance matching is performed. It should be noted that the necessity of switching the power reception coil 41 or the driver coil 31 may be determined by using the power reflection coefficient ($\Gamma$) instead of the power reflection ratio "S".

Also, the order of switching the power reception coil 41 or switching of the driver coil 31 may be arbitrarily changed. For instance, when switching of the driver coil 31 is to be performed first, the driver coil unit 31A, 31B, 31C of the driver coil 31 is switched first, and when the power reflection ratio "S" of a specified range has not been realized even though a switching limit (for instance, driver coil unit 31A or 31C) has been reached, the power reception coil 41 is switched by one stage and after that, the driver coil unit 31A, 31B, 31C of the driver coil 31 is sequentially switched again. Switching of the driver coil 31 and switching of the power reception coil 41 is repeated in the same manner until the power reflection ratio "S" becomes a predetermined value or less. It should be noted that as for the priority order of the power reception coil 41 and the driver coil 31, the power reception coil 41 may be prioritized. Also, only the power reception coil 41 may be switched without switching the driver coil 31, and only the driver coil 31 may be switched without switching the power reception coil 41.

In this manner, the wireless power feeding system 1A according to the present embodiment is a wireless power feeding system 1A equipped with a power transmission device 3 equipped with a power transmission-side resonance circuit that includes a power transmission coil 32, a power reception device 4 equipped with a power reception unit 43 that has a power reception-side resonance circuit that includes a power reception coil 41, and that is connectable to a load 8 to which power received by the power reception coil 41 is supplied, and a controller 92 that controls the power reception unit 43, which wireless power feeding system 1A transmits and receives power between the power transmission coil 32 and the power reception coil 41 using the magnetic field resonance method, wherein the power reception coil 41 is configured to be capable of selecting a plurality of coil regions 41A, 41B, 41C that have different numbers of coil windings in accordance with connecting positions of a plurality of terminals provided at the power reception coil 41, and wherein the controller 92 changes an inductance of the power reception coil 41 by switching the plurality of terminals to mitigate a difference between a load side impedance, which is an impedance from an input end IE of the power transmission device 3 to a circuit on the load 8 side, and an input side impedance, which is an impedance from the input end IE of the power transmission device 3 to a circuit on a AC power source 5 side.

With this configuration, when the load side impedance and the input side impedance do no match, the difference between the input side impedance and the load side impedance are mitigated by suitably selecting a plurality of coil regions 41A, 41B, 41C that have different numbers of coil windings and by changing the strength and weakness of the bonding strength (sparseness and density of magnetic field coupling) of magnetic field coupling of power transmission coil 32 and the power reception coil 41, so that generation of reflected waves at the input end is restricted to thereby avoid lowering of power transmission efficiency and system failures arising from reductions in transmitted power.

Also, the wireless power feeding system 1A according to the present embodiment has been so configured that the controller 92 adjusts, by switching a plurality of terminals, the inductance of the selected coil region 41A, 41B, 41C and the capacitance of the capacitor 42 disposed in series with the selected coil region 41A, 41B, 41C in such a way that the magnetic resonance between the power transmission coil 32 and the power reception coil 41 can be maintained.

This configuration makes it possible to easily maintain the magnetic resonance since the capacitance of the capacitor 42 that corresponds to the inductance of the selected coil region 41A, 41B, 41C is preliminarily set so that the magnetic resonance of the power transmission coil 32 and the power reception coil 41 can be maintained no matter which of the coil regions 41A, 41B, 41C is selected.

Also, the wireless power feeding system 1A according to the present embodiment has been so configured that the power transmission device 3 is further equipped with a driving unit 35 that has a driver coil 31 that is provided to be capable of magnetic field coupling with the power transmission coil 32 to transmit power to the power transmission coil 32, and that the controller 92 controls the driving unit 35 to change the coupling strength in magnetic field coupling between the power transmission coil 32 and the driver coil 31.

With this configuration, by changing the strength and weakness of coupling strength in magnetic field coupling of the driver coil 31 and the power transmission coil 32, the impedance of the circuit in the driving unit 35 increases or decreases to mitigate the difference between the input side impedance and the load side impedance, so that generation of reflected waves at the input end IE is suppressed to thereby avoid lowering of power transmission efficiency and system failures arising from reductions in transmitted power.

Also, the wireless power feeding system 1A according to the present embodiment has been so configured that the power transmission device 3 is further equipped with a reflected power detecting unit 37 that is disposed between the AC power source 5 and the driver coil 31 to detect reflected power at the driver coil 31, and that the controller 92 controls the power reception unit 43 or the driving unit 35 in accordance with a magnitude of reflected power detected by the reflected power detecting unit 37.

With this configuration, by changing the coupling strength in magnetic field coupling of the power transmission coil 32 and the power reception coil 41 or by changing the coupling strength in magnetic field coupling of the driver coil 31 and the power transmission coil 32 in accordance with the detection result of the reflected power detecting unit 37, the difference between the input side impedance and the load side impedance is mitigated, so that generation of reflected waves at the input end IE is suppressed to thereby avoid lowering of power transmission efficiency and system failures arising from reductions in transmitted power.

Also, the wireless power feeding system 1A according to the present embodiment has been so configured that the power transmission device 3 is equipped with a driving unit 35 that has a driver coil 31 that is provided to be capable of magnetic field coupling with the power transmission coil 32 to transmit power to the power transmission coil 32, and a reflected power detecting unit 37 that is disposed between the power source device 5A and the driver coil 31 to detect reflected power at the driver coil 31, and that the controller 92 selects, based on a preliminarily stored correspondence of power reflection ratio or power reflection coefficient that is calculated from the reflected power and an inductance of the power reception coil 41, a plurality of coil regions 41A, 41B, 41C by switching a plurality of terminals in accordance with the power reflection ratio or the power reflection coefficient.

With this configuration, since the optimal coil region 41A, 41B, 41C can be set in accordance with the power reflection ratio or the power reflection coefficient that is calculated from the reflected power detected by the reflected power detecting unit 37, the difference between the load side impedance and the input side impedance, which is the impedance from the input end IE of the power transmission device 3 to the circuit of the power source device 5A side, is mitigated, so that generation of reflected waves at the input end IE is suppressed to thereby avoid lowering of power transmission efficiency and system failures arising from reductions in transmitted power.

Also, the wireless power feeding system 1A according to the present embodiment has been so configured that the controller 92, based on a relational expression of an actual value of the load side impedance and the power reflection ratio or the power reflection coefficient as well as a relational expression of a theoretical value of the load side impedance and an inductance of the power reception coil 41, changes an inductance of the power reception coil 41 so that the theoretical value of the load side impedance comes closer to the actual value of the load side impedance that is calculated from the power reflection ratio or the power reflection coefficient.

With this configuration, it is possible to restrict generation of reflected waves at the input end IE by setting the optimal coil region 41A, 41B, 41C so that the theoretical value of the load side impedance comes closer to the actual value of the load side impedance calculated from the power reflection ratio or the power reflection coefficient.

Also, the wireless power feeding system 1A according to the present embodiment has been so configured that the controller 92 changes the inductance of the power reception coil 41 again so as to bring the theoretical value of the load side impedance closer to the actual value of the load side impedance if the power reflection ratio or the power reflection coefficient, which is calculated from the reflected power that the reflected power detecting unit 37 detected again after changing the inductance of the power reception coil 41, is larger than a predetermined value.

With this configuration, even when the theoretical value of the load side impedance does not necessarily match with the actual value due to surrounding environments of the wireless power feeding system 1 or disturbances, it is possible to further restrict generation of reflected waves at the input end IE by repeatedly performing switching the coil region 41A, 41B, 41C so that the power reflection ratio or the power reflection coefficient becomes a predetermined value or less.

Also, the wireless power feeding system 1A according to the present embodiment has been so configured that the driver coil 31 transmits power to the power transmission coil 32 using the magnetic field resonance method, and that the controller 92 controls the driving unit 35 to change the coupling strength in magnetic field coupling between the power transmission coil 32 and the driver coil 31.

With this configuration, by changing the strength and weakness of the coupling strength in magnetic field coupling of the driver coil 31 and the power transmission coil 32, the impedance of the circuit in the driving unit 35 is increased or decreased to mitigate the difference between the input side impedance and the load side impedance, so that generation of reflected waves at the input end IE is suppressed to thereby avoid lowering of power transmission efficiency and system failures arising from reductions in transmitted power.

Also, the wireless power feeding system 1A according to the present embodiment has been so configured that the controller 92 selects, based on the preliminarily stored correspondence between the power reflection ratio or the power reflection coefficient that is calculated from reflected power and the coil region 41A, 41B, 41C of the power reception coil 41, a coil region 41A, 41B, 41C of the power reception coil 41 that corresponds to the calculated power reflection ratio or power reflection coefficient by switching a plurality of terminals.

With this configuration, since the coil region 41A, 41B, 41 that corresponds to the power reflection ratio or the power reflection coefficient that is calculated from reflected power detected by the reflected power detecting unit 37 is set based on the preliminarily set correspondence, the difference between the load side impedance and the input side impedance, which is the impedance from the input end IE of the power transmission device 3 to the circuit on the power source device 5A side, is mitigated, so that generation of reflected waves at the input end IE is suppressed to thereby avoid lowering of power transmission efficiency and system failures arising from reductions in transmitted power.

Also, the wireless power feeding system 1A according to the present embodiment has been so configured that the power transmission device 3 is equipped with a driving unit 35 that has a driver coil 31 that is provided to be capable of magnetic field coupling with the power transmission coil 32 to transmit power to the power transmission coil 32, and a reflected power detecting unit 37 that is disposed between the power source device 5A and the driver coil 31 to detect reflected power at the driver coil 31, and that the controller 92 switches, when the power reflection coefficient that is calculated from the reflected power is larger than a predetermined value, the coil regions 41A, 41B, 41 by switching a plurality of terminals so that the inductance of the power reception coil 41 becomes larger by one stage compared to before the switching, and switches, when the power reflection coefficient that is calculated from the reflected power is smaller than a predetermined value, the coil regions 41A, 41B, 41 by switching a plurality of terminals so that the inductance of the power reception coil 41 becomes smaller by one stage compared to before the switching.

With this configuration, by switching the coil region 41A, 41B, 41 by one stage in accordance with the power reflection coefficient that is calculated from the reflected power detected by the reflected power detecting unit 37 so that the power reflection ratio becomes smaller, the difference between the load side impedance and the input side impedance, which is the impedance from the input end IE of the power transmission device 3 to the circuit on the power source device 5A side, is mitigated, so that generation of reflected waves at the input end IE is suppressed to thereby avoid lowering of power transmission efficiency and system failures arising from reductions in transmitted power.

Also, the wireless power feeding system 1A according to the present embodiment is a wireless power feeding system 1A that is equipped with a power transmission device 3 equipped with a power transmitting side circuit that includes a power transmission coil 32, a driving unit 35 that has a driver coil 31 that is provided to be capable of magnetic field coupling with the power transmission coil 32 to transmit power to the power transmission coil 32, and a reflected power detecting unit 37 that is disposed between a power source device 5A and the driver coil 31 to detect reflected power at the driver coil 31, a power reception device 4 that is equipped with a power reception unit 43 that has a power reception-side resonance circuit that includes a power reception coil 41 and that is connectable to a load 8 to which power received by the power reception coil 41 is supplied, and a controller 92 that controls the driving unit 35, the wireless power feeding system 1A transmitting and receiving power between the power transmission coil 32 and the power reception coil 41 using the magnetic field resonance method, wherein the driver coil 31 is configured so that it can select a plurality of driver coil units 31A, 31B, 31C to transmit power to the power transmission coil 32 using the magnetic field resonance method, and wherein the controller 92 switches, based on a preliminarily stored correspondence of a power reflection ratio or power reflection coefficient that is calculated from the reflected power and coupling strength in magnetic field coupling of the power transmission coil 32 and the driver coil 31, the plurality of driver coil units 31A, 31B, 31C in accordance with the power reflection ratio or power reflection coefficient to change the coupling strength in magnetic field coupling of the power transmission coil 32 and the driver coil 31.

With this configuration, since a driver coil unit 31A, 31B, 31 that corresponds to the power reflection ratio or the power reflection coefficient that is calculated from the reflected power detected by the reflected power detecting unit 37 is set based on a preliminarily set correspondence, the difference between the load side impedance and the input side impedance, which is the impedance from the input end IE of the power transmission device 3 to the circuit on the power source device 5A side, is mitigated, so that generation of reflected waves at the input end IE is suppressed to thereby avoid lowering of power transmission efficiency and system failures arising from reductions in transmitted power.

Also, the wireless power feeding method using the wireless power feeding system 1A according to the present embodiment is a wireless power feeding method using a wireless power feeding system 1A that is equipped with a power transmission device 3 that has a power transmission-side resonance circuit that includes a power transmission coil 32, a power reception device 4 that is comprised with a power reception unit 43 that has a power reception-side resonance circuit that includes a power reception coil 41, and that is connectable to a load 8 to which power received by the power reception coil 41 is supplied, and a controller 92 that controls the power reception unit 43, the wireless power feeding method using the wireless power feeding system 1A transmitting and receiving power between the power transmission coil 32 and the power reception coil 41 using the magnetic field resonance method, wherein the power reception coil 41 is configured to be capable of selecting a plurality of coil regions 41A, 41B, 41C that have different numbers of coil windings in accordance with connecting positions of a plurality of terminals provided at the power reception coil 41, and wherein the controller 92 changes an inductance of the power reception coil 41 by switching the plurality of terminals to mitigate a difference between a load side impedance, which is an impedance from an input end IE of the power transmission device 3 to a circuit on the load 8 side, and an input side impedance, which is an impedance from an input end IE of the power transmission device 3 to the circuit on an AC power source 5 side.

With this configuration, by suitably selecting, when the load side impedance and the input side impedance do not match, a plurality of coil regions 41A, 41B, 41C that have different numbers of coil windings and changing the strength and weakness of the coupling strength in magnetic field coupling of the power transmission coil 32 and the power reception coil 41, the difference between the input side impedance and the load side impedance is mitigated, so that generation of reflected waves at the input end IE is suppressed to thereby avoid lowering of power transmission efficiency and system failures arising from reductions in transmitted power.

Also, the wireless power feeding method according to the present embodiment has been so configured that the power transmission device 3 is further equipped with a driving unit 35 that has a driver coil 31 that is provided to be capable of magnetic field coupling with the power transmission coil 32 to transmit power to the power transmission coil 32, and that the controller 92 controls the driving unit 35 to change coupling strength in magnetic field coupling between the power transmission coil 32 and the driver coil 31.

With this configuration, by changing the strength and weakness of the coupling strength in magnetic field coupling of the driver coil 31 and the power transmission coil 32, the impedance of the circuit in the driving unit 35 is increased or decreased to mitigate the difference between the input side impedance and the load side impedance, so that generation of reflected waves at the input end IE is suppressed to thereby avoid lowering of power transmission efficiency and system failures arising from reductions in transmitted power.

Also, in the wireless power feeding method using the wireless power feeding system 1A according to the present embodiment, the power transmission device 3 is equipped with a driving unit 35 that has a driver coil 31 that is provided to be capable of magnetic field coupling with the power transmission coil 32 to transmit power to the power transmission coil 32, and a reflected power detecting unit 37 that is disposed between the power source device 5A and the driver coil 31 to detect reflected power at the driver coil 31, wherein the controller 92 selects, based on preliminarily stored correspondences between the power reflection ratio or power reflection coefficient that is calculated from the reflected power, a load side impedance, which is an impedance from the input end IE of the power transmission device 3 to a circuit on the load 8 side, and an inductance of the power reception coil 41, coil regions 41A, 41B, 41C by switching a plurality of terminals in accordance with the power reflection ratio or the power reflection coefficient.

With this configuration, since the optimal coil region 41A, 41B, 41C can be set in accordance with the power reflection ratio or power reflection coefficient that is calculated from the reflected power detected by the reflected power detecting unit 37, the difference between the load side impedance and the input side impedance, which is the impedance from the input end IE of the power transmission device 3 to the circuit of the power source device 5A side, is mitigated, so that generation of reflected waves at the input end IE is suppressed to thereby avoid lowering of power transmission efficiency and system failures arising from reductions in transmitted power.

Also, the wireless power feeding method according to the present embodiment has been so configured that the driver coil 31 transmits power to the power transmission coil 32 using the magnetic field resonance method, and that the controller 92 controls the driving unit 35 to change the coupling strength in magnetic field coupling between the power transmission coil 32 and the driver coil 31.

With this configuration, by changing the strength and weakness of the coupling strength in magnetic field coupling of the driver coil 31 and the power transmission coil 32, the impedance of the circuit in the driving unit 35 is increased or decreased to mitigate the difference between the input side impedance and the load side impedance, so that generation of reflected waves at the input end IE is suppressed to thereby avoid lowering of power transmission efficiency and system failures arising from reductions in transmitted power.

Also, the wireless power feeding method according to the present embodiment has been so configured that adjustment of the load side impedance by the controller 92 is performed by first performing rough adjustment by switching the terminals of the power reception coil 41 and then performing fine adjustment by controlling the driving unit 35.

With this configuration, it is possible to accurately control the load side impedance by first performing rough adjustment by switching the coil region 41A, 41B, 41C of the power reception coil 41 and then performing fine adjustment of the load side impedance by controlling the driving unit 35.

Also, a wireless power receiving system 11 according to the present embodiment is a wireless power receiving system 11 that receives power that is transmitted using the magnetic field resonance method from a power transmission device 3 equipped with a power transmission-side resonance circuit that includes a power transmission coil 32, which wireless power receiving system 11 is equipped with a power reception unit 43 having a power reception-side resonance circuit that includes a power reception coil 41 and is connectable to a load 8 to which power received by the power reception coil 41 is supplied, wherein the power reception coil 41 is configured to be capable of selecting a plurality of coil regions 41A, 41B, 41C that have different numbers of coil windings in accordance with connecting positions of a plurality of terminal provided at the power reception coil 41, and wherein a controller 92 changes an inductance of the power reception coil 41 by switching the plurality of terminals to mitigate a difference between a load side impedance, which is the impedance from an input end IE of the power transmission device 3 to the circuit on the load 8 side, and an input side impedance, which is the impedance from the input end IE of the power transmission device 3 to a circuit of an AC power source 5 side.

With this configuration, by suitably selecting, when the load side impedance and the input side impedance do not match, a plurality of coil regions 41A, 41B, 41C that have different numbers of coil windings and changing the strength and weakness of the coupling strength in magnetic field coupling of the power transmission coil 32 and the power reception coil 41, the difference between the input side impedance and the load side impedance is mitigated, so that generation of reflected waves at the input end IE is suppressed to thereby avoid lowering of power transmission efficiency and system failures arising from reductions in transmitted power.

Also, although in the above-described embodiments, a factor of causing fluctuation of the load side impedance has been explained taking the fluctuation of the load current accompanying switching the DC-DC converter 7 ON and OFF as an example, factors of causing fluctuations in the load side impedance are not limited thereto.

For instance, in the present embodiment, a configuration in which the input side impedance and the load side impedance are preliminarily matched when the DC-DC converter 7 is idling has been illustrated; however, configuration may be so provided that the input side impedance and the load side impedance are preliminarily matched when the DC-DC converter 7 changes from the idling state to ON or when the load side impedance has stabilized after the DC-DC converter 7 has been turned on.

Also, in the wireless power feeding system 1A shown in FIG. 1, the reflected power detecting unit 37 is disposed in the power transmission device 3 and is provided between the input end IE of the power transmission device 3 and the driver coil 31, but the position of disposing the reflected power detecting unit 37 is not limited thereto.

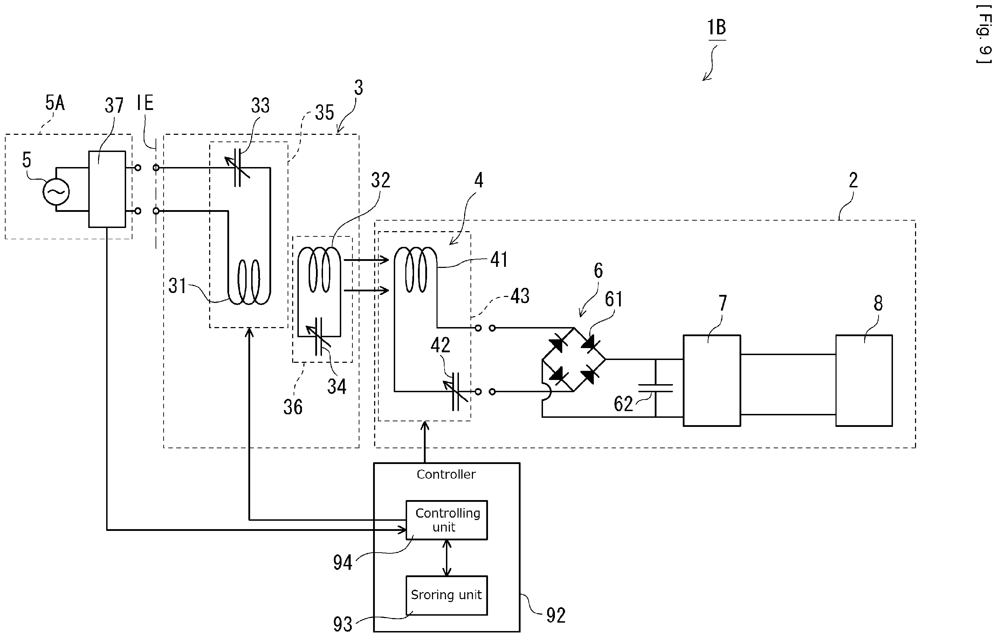

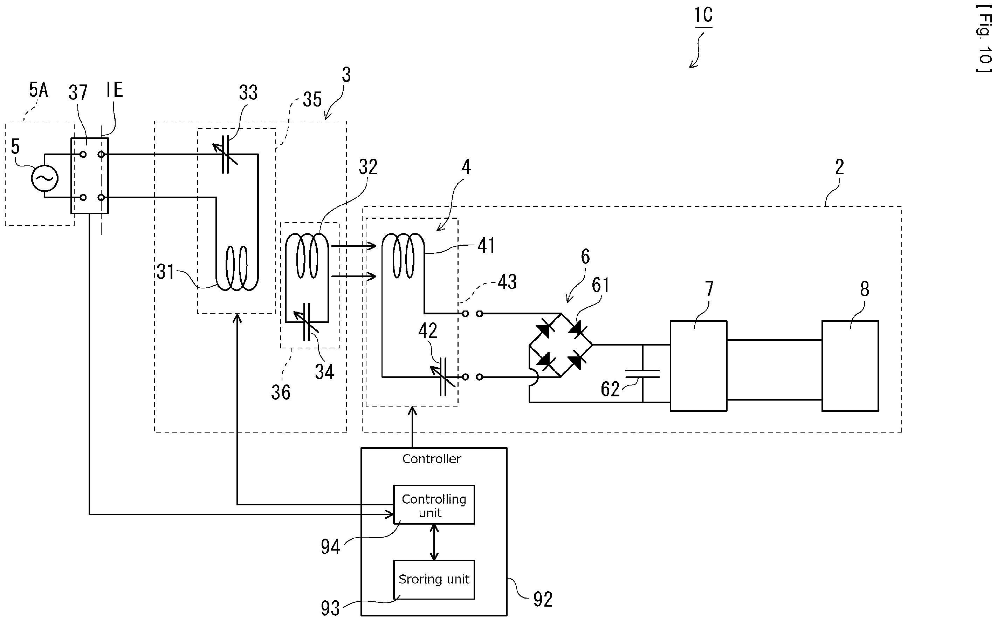

For instance, the reflected power detecting unit 37 may be disposed in the power source device 5A and the reflected power detecting unit 37 may be disposed between the AC power source 5A and the input end IE of the power transmission device 3 as in the wireless power feeding system 1B shown in FIG. 9. Also, the input end IE of the power transmission device 3 may be provided in the reflected power detecting unit 37 and the reflected power detecting unit 37 may be disposed between the AC power source 5A and the power transmission device 3 as in the wireless power feeding system 1C shown in FIG. 10. Even in these wireless power feeding systems 1B, 1C, similarly to the wireless power feeding system 1A, it is possible to mitigate the difference between the load side impedance and the input side impedance, suppress generation of reflected waves at the input end IE, and avoid lowering of power transmission efficiency and system failures arising from reductions in transmitted power. Which configuration should be adopted, the wireless power feeding systems 1A, 1B, or 1C, may be suitably determined in accordance with the location or environment of installing the wireless power feeding system or configurations of the object of power supply 2 or the power transmission device 3.

Also, since the reflected power detecting unit 37 has impedances due to parasitic resistances or parasitic inductors or the like, errors are caused in detected values by the reflected power detecting unit 37. The magnitude or such errors in detected values are assumed to vary depending on configurations of the object of power supply 2 (for instance, motor driving or battery charging, which has relatively large impedance fluctuations, or operation of home appliances or the like, which has relatively small impedance fluctuations). Therefore, construct the wireless power feeding system 1A, 1B, 1C, measure power at the input end IE and measure each impedance on the power source side/load side with an external tester for each system, and then a form with which, for instance, errors or error fluctuations of the reflected power detecting unit 37 are smallest in accordance with the configuration of the object of power supply 2 may be suitably selected. It should be noted that errors themselves in detected values of the reflected power detecting unit 37 may be optimally adjusted, for instance, through offset designing at the stage of designing or through offset adjustment of individual products at the time of shipping inspections.

Next, modified examples of the present embodiment will be described. It should be noted that in the various modified examples, the configurations other than those explained hereinbelow are identical to those of the above-described embodiments.

<Modified Example 1>

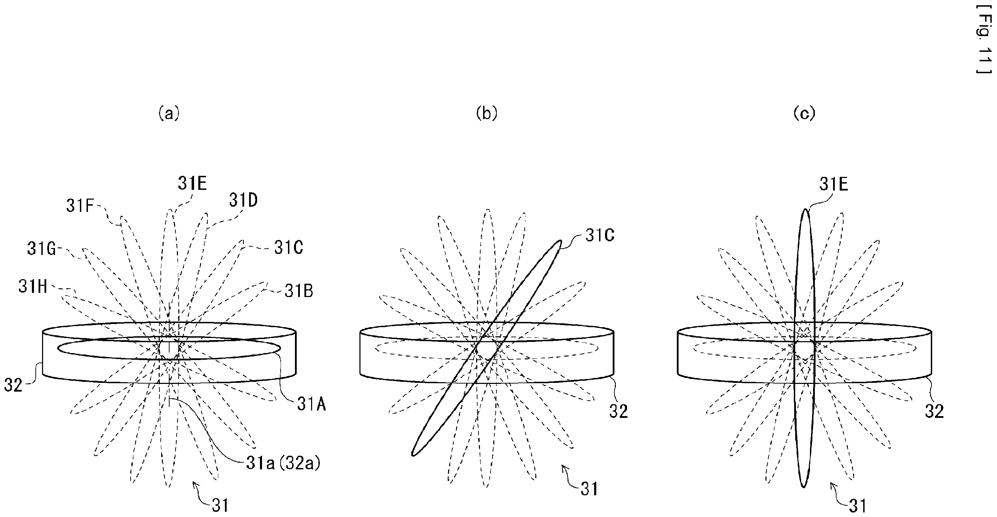

The driver coil 31 according to the present modified example may, for instance, be equipped with eight driver coil units 31A to 31H disposed in a spherical shape as shown in FIG. 11(a) to FIG. 11(c).

The driver coil 31 is composed of the driver coil units 31A to 31H inclined to each other with their centers coinciding. The driver coil units 31A to 31H are formed by dividing one coil into eight and are substantially connected in series. While details of connection relations among the driver coil units 31A to 31H are omitted, they are connected in such a way that power from the AC power source 5 can be supplied to at least one of the driver coil units 31A to 31H by means of a switch or the like (not shown) as in FIG. 2.

As shown in FIG. 11(a), the driver coil unit 31A is accommodated in the power transmission coil 32 in a state its coil axis 31a and a coil axis 32a of the power transmission coil 32 are substantially aligned, that is, without inclining with respect to the power transmission coil 32. Also, as shown in FIG. 11(b), a part of the driver coil unit 31C is accommodated in the power transmission coil 32 in a state inclined by approximately 45 degrees with respect to the power transmission coil 32. Then, as shown in FIG. 11(c), a part of the driver coil unit 31E is accommodated in the power transmission coil 32 in a state inclined by approximately 90 degrees with respect to the power transmission coil 32. Also, a part of the driver coil units 31B, 31D, and 31F to 31H is accommodated in the power transmission coil 32 in a state inclined at approximately 22.5 degrees, approximately 67.5 degrees, approximately 112.5 degrees, approximately 135 degrees, and approximately 157.5 degrees, respectively, with respect to the power transmission coil 32.

At this time, the magnetic field coupling of the driver coil 31 and the power transmission coil 32 becomes denser the larger the opposing areas are. That is, since the coil axis 31a of the driver coil unit 31A and the coil axis 32a of the power transmission coil 32 are positioned coaxially, the magnetic field coupling of the driver coil 31 and the power transmission coil 32 becomes densest. The driver coil 31E has the sparsest magnetic field coupling with the power transmission coil 32.

With this configuration, it is possible to perform impedance matching processes by suitably switching, for instance, the three driver coil units 31A, 31B, 31C. That is, in a state where the load side impedance is larger than the input side impedance, by supplying power to the driver coil unit 31A as shown in FIG. 11(a), the magnetic field coupling of the driver coil 31 and the power transmission coil 32 becomes denser, and the impedance of the circuit in the power transmission device 3 decreases. As a result, the load side impedance at the input end IE becomes smaller and the difference from the input side impedance is mitigated.

On the other hand, in a state where the load side impedance is smaller than the input side impedance, by supplying power to the driver coil unit 31C that is further inclined with respect to the power transmission coil 32 than the driver coil unit 31A as shown in FIG. 11(b), the magnetic field coupling of the driver coil 31 and the power transmission coil 32 becomes sparser, and the impedance of the circuit in the power transmission device 3 increases. As a result, the load side impedance at the input end IE becomes larger and the difference from the input side impedance is mitigated.

Moreover, when the input side impedance further reduces, by supplying power to the driver coil unit 31E that is orthogonal to the power transmission coil 32 as shown in FIG. 11(c), the magnetic field coupling of the driver coil 31 and the power transmission coil 32 becomes even sparser and the impedance of the circuit in the power transmission device 3 further increases, resulting in that the load side impedance at the input end IE becomes larger and the difference from the input side impedance is mitigated .

With this configuration, power is selectively supplied to at least one of the driver coil units 31A to 31H, so that it is possible to adjust the bonding strength of the driver coil 31 and the power transmission coil 32.

Also, the number of the driver coil units that compose the spherical driver coil 31 of the present modified example is not limited to eight, and it may be any number of at least two. Also, while the inclinations of the driver coil units 31A to 31H with respect to the power transmission coil 32 are set in the range of 0 degree to 180 degrees in the present modified example, they may also be set in the range of -90 degrees to +90 degrees taking phases of the coils into account.

The driver coil 31 is not limited to be one accommodated in the power transmission coil 32 but may also be disposed outside of the power transmission coil 32. Also, a part of the driver coil units 31A to 31H may be disposed in the power transmission coil 32 and the remaining driver coil units 31A to 31H may be disposed outside of the power transmission coil 32. It should be noted that, by configuring the inclination of the driver coil 31 with respect to the power transmission coil 32 to be switchable in such a way that the coupling coefficient $k_{01}$ becomes a geometric series, the impedance adjusting regions at each angle of the driver coil 31 will be substantially constant, so that impedance matching can be performed even more stably.

<Modified Example 2>

The impedance matching mechanism 9 may be a coil moving mechanism in which the driver coil 31 is moved relative to the power transmission coil 32.

As such a coil moving mechanism, for instance, one in which the driver coil units 31A, 31B, 31C are slid in a direction perpendicular to the coil axis 32a in such a way that each of the coil axes 31a, 31b, 31c separates from or comes closer (coincide) relative to the coil axis 32a while maintaining the substantially parallel state of the coil axes 31a, 31b, 31c and the coil axis 32a can be considered.

Here, when the coil axes 31a, 31b, 31c and the coil axis 32a of the power transmission coil 32 are located coaxially, the magnetic field coupling with the power transmission coil 32 becomes denser (the bonding strength (bonding coefficient) becomes larger). On the other hand, when the coil axes 31a, 31b, 31c are offset with respect to the coil axis 32a of the power transmission coil 32 in a direction perpendicular to the coil axis 31a, the magnetic field coupling with the power transmission coil 32 becomes sparser (the bonding strength (bonding coefficient) becomes smaller).

Then, the impedance may be optimized by roughly adjusting the impedance by moving the driver coil 31 relative to the power transmission coil 32 by means of the coil moving mechanism and fine adjusting the impedance by switching control over the switches 91a to 91d thereafter. In this case, the impedance can be smoothly optimized even in the case of sudden changes in the impedance since fine adjustment of the impedance can be performed rapidly.

<Modified Example 3>

In the above-described Modified Example 2, a coil moving mechanism that slides the driver coil units 31A, 31B, 31C in a direction perpendicular to the coil axis 32a while maintaining the substantially parallel state of the coil axes 31a, 31b, 31c and the coil axis 32a, the coil moving mechanism may also be configured to move the driver coil units 31A, 31B, 31C in a direction parallel to the axial direction of the coil axes 31a, 31b, 31c and the coil axis 32a.

Here, the closer the driver coil units 31A, 31B, 31C come to the transmission coil 32, the denser the magnetic field coupling with the power transmission coil 32 becomes (the larger the bonding coefficient becomes), and the farther the driver coil units 31A, 31B, 31C separate from the transmission coil 32, the sparser the magnetic field coupling with the power transmission coil 32 becomes (the smaller the bonding coefficient becomes).

Then, the impedance may be optimized by roughly adjusting the impedance by moving the driver coil 31 relative to the power transmission coil 32 by means of the coil moving mechanism and finely adjusting the impedance by switching control over the switches 91a to 91d thereafter. In this case, the impedance can be smoothly optimized even in the case of sudden changes in the impedance since fine adjustment of the impedance can be performed rapidly.

<Modified Example 4>

In the above-described embodiment, the driver coil 31 composed of driver coil units 31A, 31B, 31C in which coil axes 31a, 31b, 31c are disposed nearly coaxially has been illustrated, but the configuration of the driver coil 31 is not limited thereto.

For instance, the driver coil 31 may be equipped with driver coil units 31A, 31B, 31C in which coil axes 31a, 31b, 31c are disposed offset in such a way that they are separate from each other in a nearly parallel manner.

Here, the magnetic field coupling of the driver coil 31 and the power transmission coil 32 becomes denser the larger opposing areas are. It is possible to adjust the strength and weakness of the magnetic field coupling (sparseness and density of magnetic field coupling) of the driver coil 31 and the power transmission coil 32 since power is selectively supplied to at least one of the driver coil units 31A, 31B, 31C by switching control over the switches 91a to 91d.

<Modified Example 5>

In the above-described embodiment, the driver coil 31 composed of driver coil units 31A, 31B, 31C that have nearly identical shapes has been illustrated, but the driver coil units 31A, 31B, 31C may have mutually different shapes.

For instance, the driver coil 31 may be so configured that the coil axes 31a, 31b, 31c are disposed nearly coaxially, that, with respect to the driver coil units 31A, 31B, 31C, their coil diameters are set so as to be gradually smaller and their coil heights taller in this order, and that the coil diameters are enlarged and reduced in a spiral shape in nearly the same plane.

At this time, the magnetic field coupling of the driver coil 31 and the power transmission coil 32 becomes denser the smaller the difference of the coil diameters is. Then, it is possible to adjust the strength of the magnetic field coupling of the driver coil 31 and the power transmission coil 32 since power is selectively supplied to at least one of the driver coil units 31A, 31B, 31C by switching control over the switches 91a to 91d.

<Modified Example 6>

Also, the driver coil 31 may be so configured that the coil axes 31a, 31b, 31c are disposed nearly coaxially, that the driver coil units 31A, 31B, 31C are disposed in nearly the same plane, and that, with respect to the driver coil units 31A, 31B, 31C, their coil diameters are set so as to be gradually smaller in this order and their coil diameters become gradually smaller from the outer periphery towards the center in the same plane.

At this time. the magnetic field coupling of the driver coil 31 and the power transmission coil 32 becomes denser the smaller the difference of the coil diameters is. It is possible to adjust the strength and weakness of magnetic field coupling (sparseness and density of magnetic field coupling) of the driver coil 31 and the power transmission coil 32 since power is selectively supplied to at least one of the driver coil units 31A, 31B, 31C by switching control over the switches 91a to 91d.

<Second Embodiment>

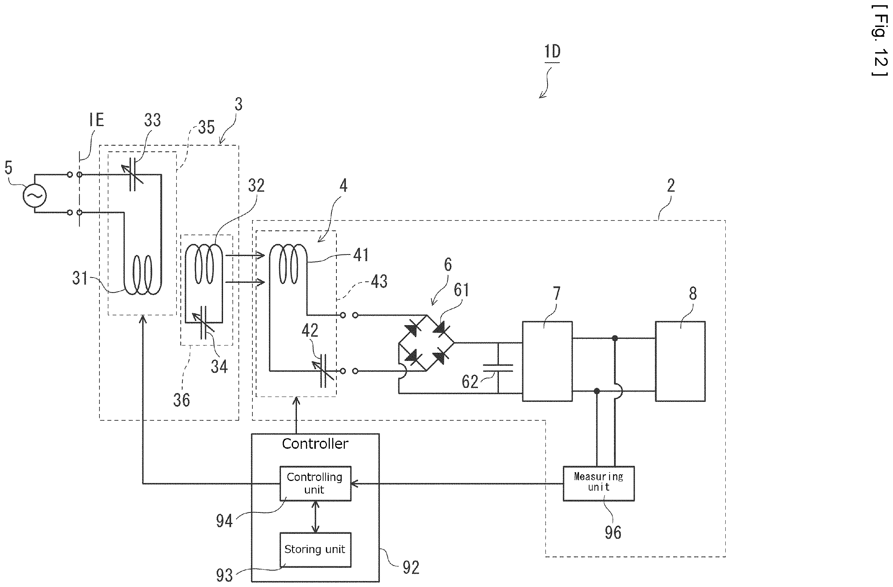

Next, the wireless power feeding system 1D according to a second embodiment of the present invention will be explained based on the drawings. FIG. 12 is a schematic view showing a configuration of the wireless power feeding system 1D according to the second embodiment. It should be noted that the wireless power feeding system 1D according to the present embodiment differs from the wireless power feeding system 1A according to the above-described first embodiment in the following points while other configurations are in common. Therefore, common configurations are marked with the same reference signs, and duplicated explanations will be omitted.

The wireless power feeding system 1D according to the present embodiment is to maintain impedance matching when, for instance, the impedance "$Z_0$" fluctuates as charging of the battery, which corresponds to the load 8, progresses in a state where the power transmission device 3 and the power reception device 4 are fixed to maintain a nearly constant distance between the power transmission coil 32 and the power reception coil 41.

The power reception device 4 is equipped with a measuring unit 96 that is provided between the DC-DC converter 7 and the load 8 and measures at least one of load voltage and load current that is supplied to the load 8. For instance, when power is supplied to the load 8, the load voltage increases to a constant voltage, and the load current increases rapidly. At this time, the load side impedance "$Z_0$" becomes rapidly smaller. On the other hand, the input side impedance "$Z_s$" is fixed at a predetermined value (for instance, 50 Ω), and it may be that the input side impedance "$Z_s$" and the load side impedance "$Z_0$" do not match to cause reflected waves at the input end IE, thereby causing lowering of power transmission efficiency or system failures due to shortage in transmission power. Moreover,

Following this, the controller 92 switches the switches 91a to 91d in accordance with the measurement result of the measuring unit 96, adjusts the coupling strength in magnetic field coupling of the driver coil 31 and the power transmission coil 32 to adjust the coupling coefficient "$k_{01}$", and increases or decreases the impedance of the circuit in the power transmission device 3. Alternatively, the controller 92 switches the switches 91e to 91f in accordance with fluctuations in the load side impedance "$Z_0$", adjusts the coupling strength in magnetic field coupling of the power transmission coil 32 and the power reception coil 41 to adjust the coupling coefficient "$k_{01}$", and increases or decreases the impedance of the circuit in the power reception device 4. By this, the load side impedance "$Z_0$" becomes larger to mitigate the difference from the input side impedance "$Z_s$".

With this configuration, by changing the coupling strength in magnetic field coupling of the power transmission coil 32 and the power reception coil 41 or the coupling strength in magnetic field coupling of the driver coil 31 and the power transmission coil 32 in accordance with the measurement result of the measuring unit 96 in the wireless power feeding system 1D according to the present embodiment, the difference between the input side impedance and the load side impedance is mitigated, so that generation of reflected waves at the input end IE is suppressed to thereby avoid lowering of power transmission efficiency and system failures arising from reductions in transmitted power.

<Third Embodiment>

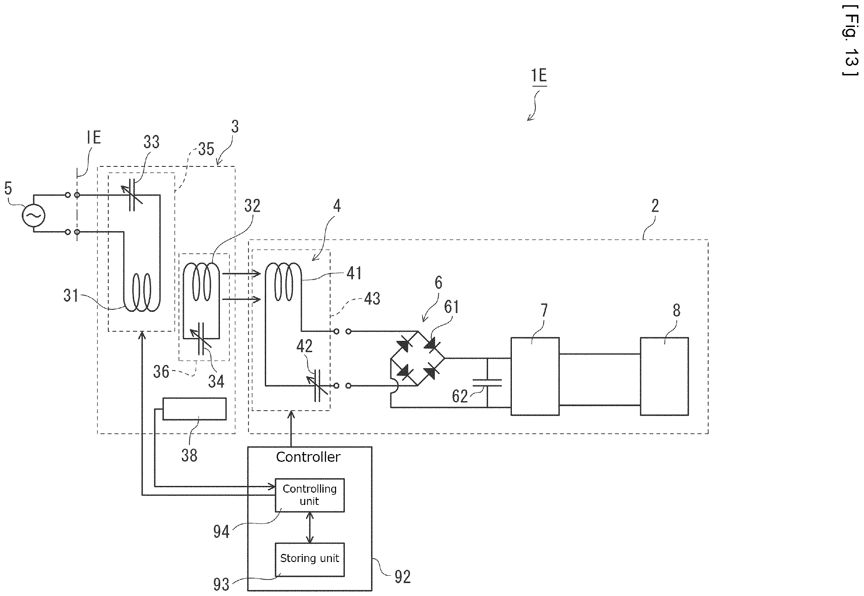

Next, the wireless power feeding system 1E according to a third embodiment of the present invention will be explained based on the drawings. FIG. 13 is a schematic view showing a configuration of the wireless power feeding system 1E according to the third embodiment. It should be noted that the wireless power feeding system 1E according to the present embodiment differs from the wireless power feeding system 1A according to the above-described first embodiment in the following points while other configurations are in common. Therefore, common configurations are marked with the same reference signs, and duplicated explanations will be omitted.

For instance, when the relative position of the power transmission coil 32 and the power reception coil 41 changes accompanying movements of the object of power supply 2, specifically, when the power reception coil 41 comes closer to the power transmission coil 32, the coupling strength in magnetic field coupling of the power transmission coil 32 and the power reception coil 41 becomes larger, and when the power reception coil 41 separates from the power transmission coil 32, the coupling strength in magnetic field coupling of the power transmission coil 32 and the power reception coil 41 becomes smaller, thus the coupling state of magnetic field coupling of the power transmission coil 32 and the power reception coil 41 fluctuates. Hence, the wireless power feeding system 1E according to the present embodiment maintains the impedance matching when the relative position of the power transmission coil 32 and the power reception coil 41 changes.

The power transmission device 3 is equipped with a relative position measuring unit 38 that measures a relative position of the power transmission coil 32 and the power reception coil 41. The relative position measuring unit 38 is, for instance, a laser length measuring instrument, a three-dimensional camera, or the like. It should be noted that the relative position measuring unit 38 may be provided in the power reception device 4. Also, it is preferable that the relative position measuring unit 38 measures not only the distance between the power transmission coil 32 and the power reception coil 41 but also the relative inclination of each coil axis. The controller 92 calculates the load side impedance "$Z_0$" in accordance with the measurement result of the relative position measuring unit 38. When the load side impedance "$Z_0$" falls below a specified threshold, the controller 92 selects any one of the coil regions 41A, 41B, 41C by switching the switches 91e to 91f and changes the inductance "$L_2$" of the power reception coil 41.

Alternatively, the coupling coefficient "$k_{01}$" of the driver coil 31 and the power transmission coil 32 may be changed in addition to changing the inductance "$L_2$" of the power reception coil 41. In other words, when the impedance "$Z_0$" falls below a specified threshold, the controller 92 may control the power reception unit 43 and the driving unit 35. Specifically, the controller 92 can further restrict reductions in the impedance "$Z_0$" by changing the inductance "$L_2$" of the power reception coil 41 by the above-described selection of the coil regions 41A, 41B, 41C to make the inductance "$L_2$" of the power reception coil 41 smaller and by selecting a driver coil unit 31A, 31B, 31C by switching the switches 91a to 91d shown in FIG. 2 to make the coupling coefficient "$k_{01}$" of the driver coil 31 and the power transmission coil 32 larger. By this, it is possible to cope with even longer distance changes of the power transmission coil 32 and the power reception coil 41.

With such a configuration, by changing the coupling strength in magnetic field coupling of the power transmission coil 32 and the power reception coil 41 or the coupling strength in magnetic field coupling of the driver coil 31 and the power transmission coil 32 in accordance with the measurement result of the relative position measuring unit 38 in the wireless power feeding system 1E according to the present embodiment, the difference of the input side impedance and the load side impedance is mitigated, so that generation of reflected waves at the input end IE is suppressed to thereby avoid lowering of power transmission efficiency and system failures arising from reductions in transmitted power.

Also, an example where all of the driver coil 31, the power transmission coil 32 and the power reception coil 41 are put in a resonant state in order to suppress generation of reactive power by setting an imaginary part of the impedance to zero has been explained in each of the above-described embodiments. However, for instance, even when the capacitor 33 is not connected to the driver coil 31, power transmission itself is possible although reactive power is generated in the input impedance; therefore, only the power transmission coil 32 and the power reception coil 41 may be put in a resonant state.

Also, while an example of a configuration where three-coil system equipped with the driver coil 31, the power transmission coil 32, and the power reception coil 41has been explained in each of the above-described embodiments, a wireless power feeding system of two-coil system without the driver coil 31 but with only the power transmission coil 32 and the power reception coil 41 may be configured instead. In this case, it is possible to control the load side impedance by a configuration of dividing the power transmission coil 32 into a plurality of power transmission coil units and changing the relative position of each power transmission coil unit and the power reception coil 41.

It should be noted that in the two-coil system composed of the power transmission coil 32 and the power reception coil 41, when the position of the power transmission coil 32 is moved to fluctuate the load side impedance, the coil axis 32a of the power transmission coil 32 and the coil axis of the power reception coil 41 may not be positioned coaxially, which can be a risk of lowering of the power transmission efficiency, whereas the three-coil system composed of the driver coil 31, the power transmission coil 32, and the power reception coil 41 transmits power to the power transmission coil 32 via the driver coil 31 and adjusts the coupling strength in magnetic field coupling of the driver coil 31 and the power transmission coil 32 without changing the positional relationship between the power transmission coil 32 and the power reception coil 41, so that it is possible to control the load side impedance and maintain a favorable power transmission efficiency.

Also, while an example of a configuration where three-coil system equipped with the driver coil 31, the power transmission coil 32, and the power reception coil 41has been explained in each of the above-described embodiments, a wireless power feeding system using a four-coil system equipped with a second power reception coil in addition to the power reception coil 41 may be configured instead. In this case, the power reception coil 41 is set to have a resonance frequency approximately identical to that of the power transmission coil 32, and power is transmitted using the magnetic field resonance method. The power reception coil 41 and the second power reception coil are disposed in a non-contacting manner, and power is transmitted by the electromagnetic coupling (electromagnetic inducing) method or the magnetic field resonance method. It should be noted that in the four-coil system, the power transmission coil 32 and the power reception coil 41 are coils for resonance that are independent from other electric circuits, so that their resonance frequency does not change during driving, which enables easy design and a longer transmission distance of power.

**Examples**

<Example 1>

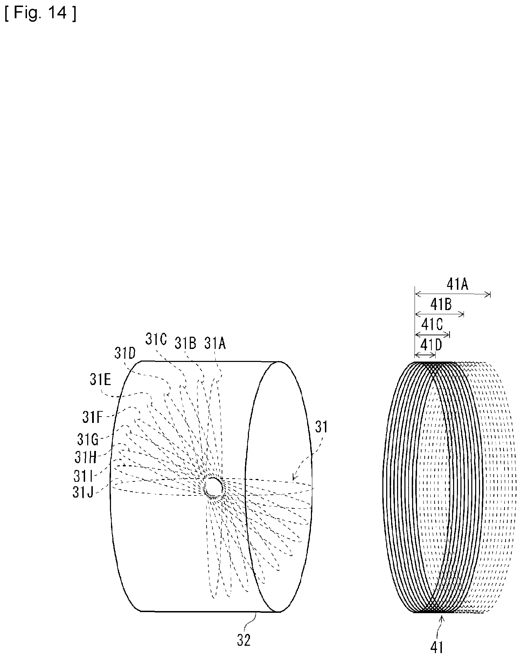

An experiment (Example 1) performed with the wireless power feeding system 1A according to the first embodiment to confirm changes in the load side impedance "$Z_0$" and the impedance "$Z_1$" when the load resistance of the load 8 is changed will be explained. It should be noted that the configuration of the driver coil 31, the power transmission coil 32, and the power reception coil 41 used in the present experiment is shown in FIG. 14.

Driver coil

The driver coil 31 is formed to have a diameter of 300 mm, and is accommodated in the power transmission coil 32 that has a diameter of 350 mm. The driver coil 31 is composed of ten driver coil units 31A to 31J of different inclinations disposed in a spherical shape. The driver coil 31A is disposed parallel to the power transmission coil 32 (inclination approximately 0 degree), the driver coil 31B is disposed to be inclined to the power transmission coil 32 by approximately 10 degrees, the driver coil 31C is disposed to be inclined to the power transmission coil 32 by approximately 20 degrees, the driver coil 31D is disposed to be inclined to the power transmission coil 32 by approximately 30 degrees, the driver coil 31E is disposed to be inclined to the power transmission coil 32 by approximately 40 degrees, the driver coil 31F is disposed to be inclined to the power transmission coil 32 by approximately 50 degrees, the driver coil 31G is disposed to be inclined to the power transmission coil 32 by approximately 60 degrees, the driver coil 31H is disposed to be inclined to the power transmission coil 32 by approximately 70 degrees, the driver coil 31I is disposed to be inclined to the power transmission coil 32 by approximately 80 degrees, and the driver coil 31J is disposed to be perpendicular to the power transmission coil 32 (inclination approximately 90 degrees).

The driver coil units 31A to 31J are made of a Litz wire with a strand diameter of 0.04 mm and a diameter of 0.9 mm, and the inductance was set to 278 $\mu$H and the capacitor to 4.05 nF.

Passive Coil

The power reception coil 41 is configured so that four coil regions 41A, 41B, 41C, 41D can be selected. The power reception coil 41 is set to have a diameter of 350 nm and is made of a Litz wire with a strand diameter of 0.04 mm and a diameter of 0.9 mm. The number of coil windings, inductance, and resistance value of the capacitor of each of the coil regions 41A, 41B, 41C, 41D were set as follows.

Coil region 41A
Number of coil windings: 56          Inductance: 1488 $\mu$H          Capacitor: 0.756 nF
Coil region 41B
Number of coil windings: 28          Inductance: 744 $\mu$H          Capacitor: 1.512 nF
Coil region 41C
Number of coil windings: 10          Inductance: 266 $\mu$H          Capacitor: 4.234 nF

(continued)

Coil region 41D
Number of coil windings: 5      Inductance: 133 μH      Capacitor: 8.367 nF

Also, each resonance frequency of a resonance circuit that includes the driver coil 31, a resonance circuit that includes the power transmission coil 32, and a resonance circuit that includes the power reception coil 41 is set to 150 kHz.

Experimental Procedures

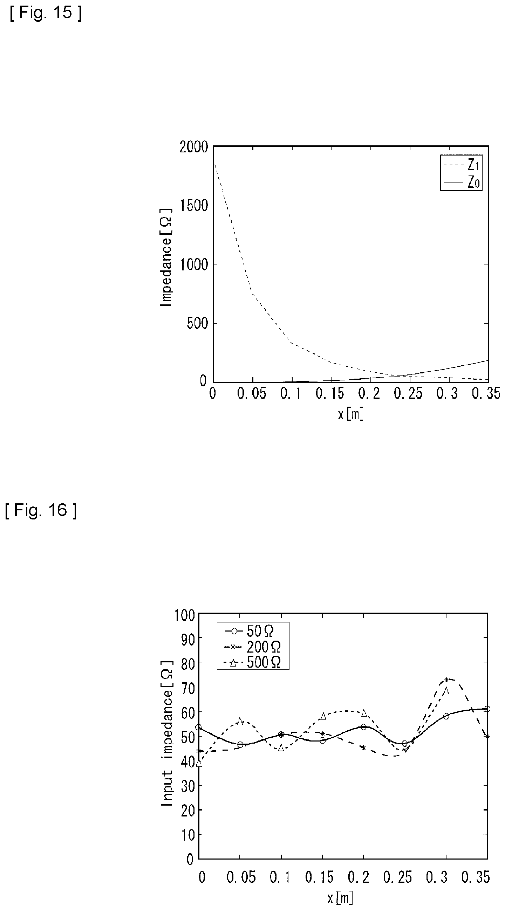

First, in a state the power reception coil 41 is fixed to the coil region 41A and the driver coil 31 to the driver coil unit 31A, the power transmission coil 32 and the power reception coil 41 were moved closer by 50 mm stepwise starting from 350 mm to measure the load side impedance "$Z_0$" at each distance. The results are shown in FIG. 15.

According to FIG. 15, it can be seen that the load side impedance "$Z_0$" becomes smaller, the closer the power transmission coil 32 and the power reception coil 41 come. This is because, based on Equation 1 and Equation 2, the larger the coupling coefficient "$k_{12}$" becomes when the power transmission coil 32 and the power reception coil 41 come closer, the larger the impedance "$Z_1$" becomes while the smaller the load side impedance "$Z_0$" becomes.

<Example 2>

Next, an experiment (Example 2) that was performed with the wireless power feeding system 1A to confirm that the load side impedance "$Z_0$" is maintained nearly constant by selecting an optimal driver coil unit 31A to 31J and coil region 41A to 41D in accordance with a value input from the reflected power detecting unit 37 will be explained. It should be noted that the driver coil 31 and the power reception coil 41 used in the present example are identical to those of Example 1.

Experimental Procedures

In the present example, the load side impedance "$Z_0$" when one of the driver coil units 31A to 31J and the coil regions 41A to 41D is selected is preliminarily obtained through an experiment or the like and stored in the storing unit 93, and it is possible to select an optimal combination of the driver coil unit 31A to 31J and the coil region 41A to 41D required for the load side impedance "$Z_0$" to maintain approximately 50 Ω. It should be noted that a configuration to preliminarily store numeric values such as the inductance, capacitance and the resonance frequency when the driver coil unit 31A to 31J and the coil region 41A to 41D are selected in the storing unit 93 and then select an optimal driver coil unit 31A to 31J and coil region 41A to 41D in accordance with the reflected power detected by the reflected power detecting unit 37 may be provided.

The load side impedances "$Z_0$" when the power transmission coil 32 and the power reception coil 41 were moved closer by 50 mm stepwise starting from 350 mm while changing the load resistance of the load 8 to 50 Ω, 200 Ω, and 500 Ω were measured. The results are shown in FIG. 16.

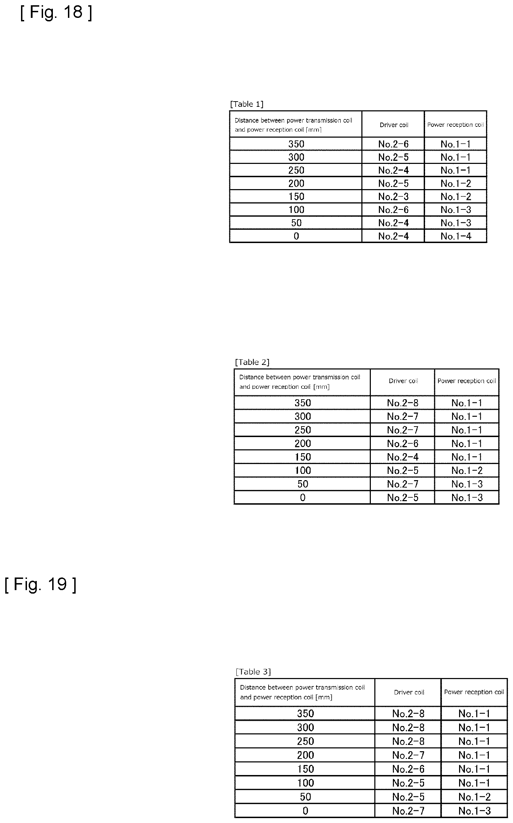

Also, a table showing combinations of the driver coil 31 and the power reception coil 41 selected at each distance when the load resistance is set to 50 Ω and the power transmission coil 32 and the power reception coil 41 are moved closer by 50 mm stepwise starting from 350 mm is shown in FIG. 17. Also, a table showing combinations of the driver coil 31 and the power reception coil 41 selected at each distances when the load resistance is set to 200 Ω and the power transmission coil 32 and the power reception coil 41 are moved closer by 50 mm stepwise starting from 350 mm is shown in FIG. 18. Also, a table showing combinations of the driver coil 31 and the power reception coil 41 selected at each distances when the load resistance is set to 500 Ω and the power transmission coil 32 and the power reception coil 41 are moved closer by 50 mm stepwise starting from 350 mm is shown in FIG. 19. It should be noted that types of the driver coil "2-1" to "2-10" in FIGs. 17 to FIG. 19 correspond to the driver coil units 31A to 31J, respectively, and the types of the power reception coil "1-1 to "1-4" correspond to the coil regions 41A to 41D, respectively.

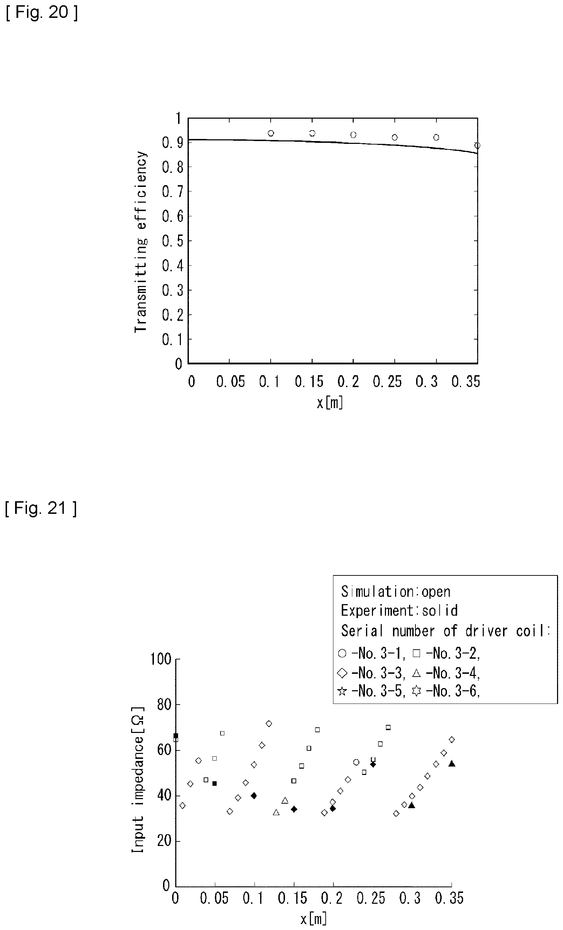

The power transmission efficiency at load resistance 50 Ω calculated based on Equation 9 is shown in FIG. 20.
[Equation 9]

$$\eta = \eta_0 \eta_1 \eta_2 = \frac{Z_0 - R_0}{Z_0} \times \frac{Z_1 - R_1}{Z_1} \times \frac{Z_2 - R_2}{Z_2} \qquad (9)$$

According to FIG. 16, it can be seen that the load side impedance "$Z_0$" is maintained at approximately 50 Ω when the distance of the power transmission coil 32 and the power reception coil 42 is 350 mm or less, regardless of whether the load resistance is 50 Ω, 200 Ω, or 500 Ω. Also, according to FIG. 20, it can be seen that the power transmission efficiency at this time maintains approximately 90% or more.

That is, it is possible to easily control the load side impedance "$Z_0$" to execute impedance matching by selecting an optimal coil region 41A to 41D and adjusting the inductance of the power reception coil 41. Also, it is possible to execute impedance matching in an even easier manner by selecting a driver coil unit 31A to 31J and adjusting the coupling coefficient "$k_{01}$" of the driver coil 31 and the power transmission coil 32.

<Example 3>

Next, an experiment and simulation (Example 3) that were performed with the wireless power feeding system 1A to confirm that the load side impedance "$Z_0$" stays within a specified range even when the load resistance changes and the distance between the power transmission coil 32 and the power reception coil 41 changes will be explained. It should be noted that the power reception coil 41 used in the present example is identical to that of Example 1.

Driver coil

The present example differs from Example 1 in that the driver coil 31 is composed of six driver coil units of different inclinations disposed in a spherical shape while other configurations are identical to those of Example 1. The driver coil units are disposed as follows so that the coupling coefficient "$k_{01}$" is $\sqrt{(78/32)}$, that is, 1.56 times the interval.

Driver coil unit No. 3-1
Coupling coefficient "$k_{01}$: approximately 0.45, inclination angle: 0°.
Driver coil unit No. 3-2
Coupling coefficient "$k_{01}$: approximately 0.41, inclination angle: 22°.
Driver coil unit No. 3-3
Coupling coefficient "$k_{01}$: approximately 0.26, inclination angle: 49°.
Driver coil unit No. 3-4
Coupling coefficient "$k_{01}$: approximately 0.17, inclination angle: 64°.
Driver coil unit No. 3-5
Coupling coefficient "$k_{01}$: approximately 0.11, inclination angle: 73°.
Driver coil unit No. 3-6
Coupling coefficient "$k_{01}$: approximately 0.07, inclination angle: 79°.

Experimental Procedures

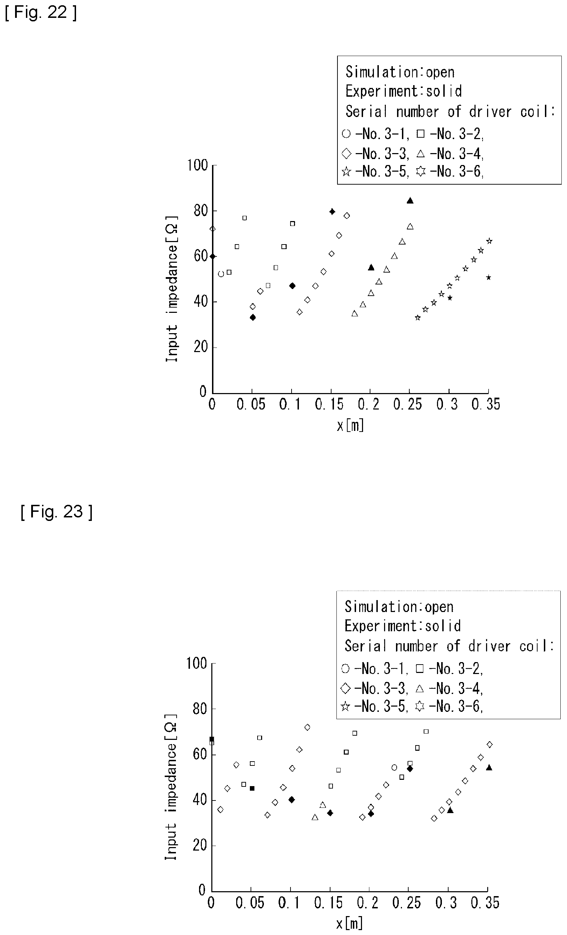

Changes in the load side impedance "$Z_0$" with a load resistance set to 50 Ω, 500 Ω, and 3079 Ω, assuming the charging status of the load 8, and the power transmission coil 32 and the power reception coil 41 are moved closer by 50 mm stepwise starting from 350 mm are shown in FIG. 21 to FIG. 23. It should be noted that in FIG. 21, the load resistance is set to 50 Ω, in FIG. 22, the load resistance is set to 500 Ω, and in FIG. 23, the load resistance is set to 3079 Ω.

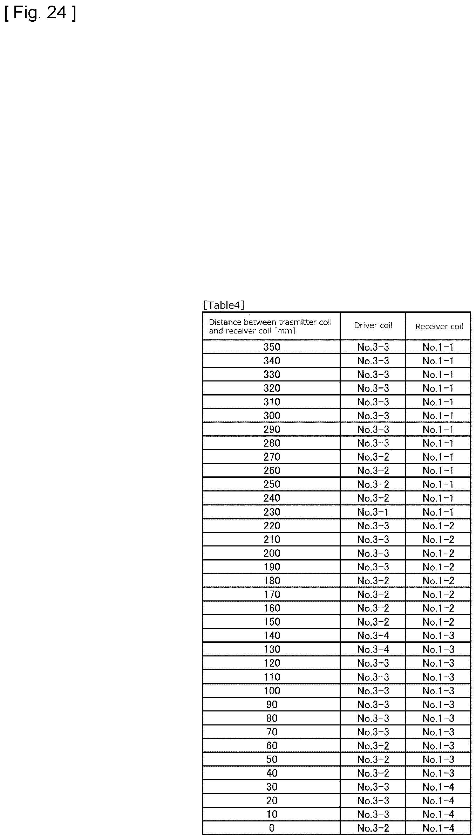

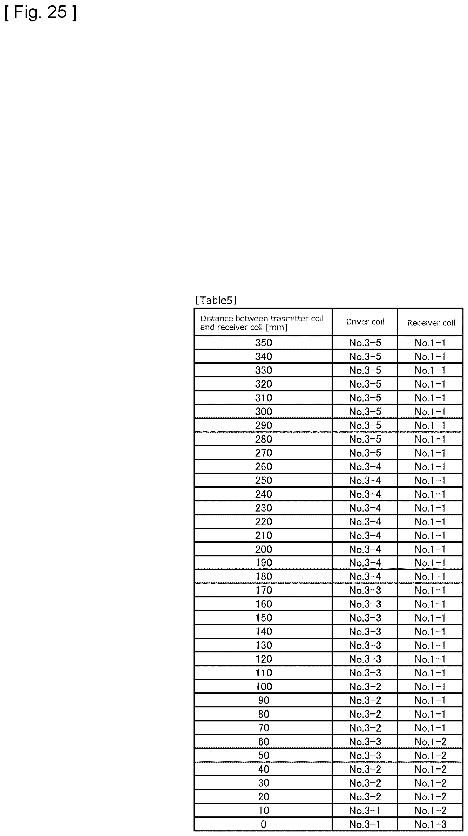

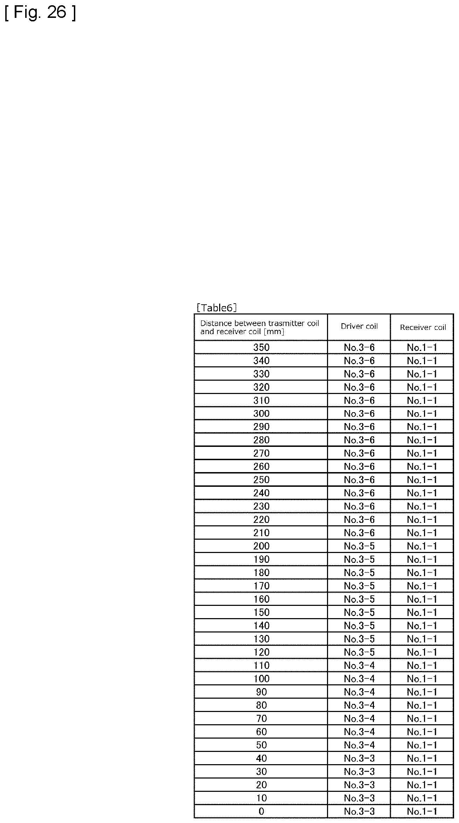

Also, a table showing combinations of the driver coil 31 and the power reception coil 41 selected at each distance when the load resistance is set to 50 Ω and the power transmission coil 32 and the power reception coil 41 are moved closer by 50 mm stepwise starting from 350 mm is shown in FIG. 24. Also, a table showing combinations of the driver coil 31 and the power reception coil 41 selected at each distances when the load resistance is set to 500 Ω and the power transmission coil 32 and the power reception coil 41 are moved closer by 50 mm stepwise starting from 350 mm is shown in FIG. 25. Also, a table showing combinations of the driver coil 31 and the power reception coil 41 selected at each distances when the load resistance is set to 3079 Ω and the power transmission coil 32 and the power reception coil 41 are moved closer by 50 mm stepwise starting from 350 mm is shown in FIG. 26. It should be noted that types of the power reception coil "1-1 to "1-4" in FIG. 24 to FIG. 26 correspond to the coil regions 41A to 41D, respectively.

According to FIG. 21 to FIG. 23, it can be seen that it was possible to maintain changes in the load side impedance "$Z_0$" in the range of 32 to 78 Ω with respect to the target value of 50 Ω by suitably selecting the driver coil 31 and the power reception coil 41, regardless of whether the load resistance of the load 8 is 50 Ω, 500 Ω, or 3079 Ω. That is, it is possible to realize a power reflection ratio of 5% or less and to realize impedance matching regardless of fluctuations in the distance between the power transmission coil 32 and the power reception coil 41 or fluctuations in the load resistance of the load 8.

<Example 4>

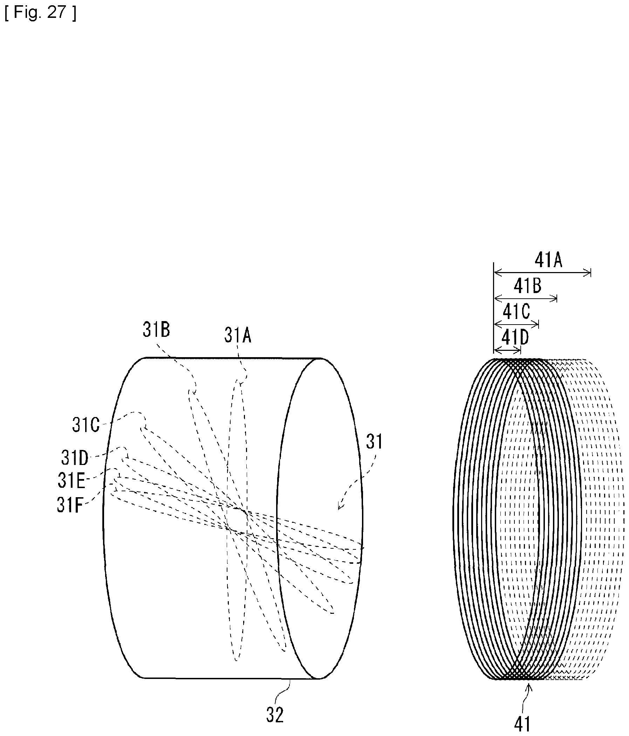

An experiment (Example 4) in which, by using the above-described wireless power feeding system 1A, impedance matching was performed by automatically switching the coil unit of the driver coil 31 and the coil region of the power reception coil 41 when the distance between the power transmission coil 32 and the power reception coil 41 was changed will be explained. It should be noted that in the present Example 4, the load resistance was constant at 50 Ω. Also, the power source frequency was set to 150 kHz. Also, the configuration of the driver coil 31, the power transmission coil 32 and the power reception coil 41 used in the present example are shown in FIG. 27. It should be noted that the power reception coil 41 used in the present example is identical to that of Example 1.

Driver coil

The driver coil 31 is formed to have a diameter of 300 mm and is accommodated in the power transmission coil 32 that has a diameter of 350 mm. The driver coil 31 is composed of six driver coil units 31A to 31F of different inclinations disposed in a spherical shape. The driver coil units 31A to 31F are disposed as follows such that the coupling coefficient "$k_{01}$" is $\sqrt{(78/32)}$, that is, 1.56 times the interval.

Driver coil unit 31A
Coupling coefficient "$k_{01}$: approximately 0.45, inclination angle: 0°.
Driver coil unit 31B
Coupling coefficient "$k_{01}$: approximately 0.41, inclination angle: 22°.
Driver coil unit 31C
Coupling coefficient "$k_{01}$: approximately 0.26, inclination angle: 49°.
Driver coil unit 31D
Coupling coefficient "$k_{01}$: approximately 0.17, inclination angle: 64°.
Driver coil unit 31E
Coupling coefficient "$k_{01}$: approximately 0.11 inclination angle: 73°.
Driver coil unit 31F
Coupling coefficient "$k_{01}$: approximately 0.07, inclination angle: 79°.

The driver coil units 31A to 31F are made of a Litz wire with a strand diameter of 0.04 mm and a diameter of 0.9 mm, and the inductance was set to 278 μH and the capacitor to 4.05 nF.
Also, each resonance frequency of a resonance circuit that includes the driver coil 31, a resonance circuit that includes the power transmission coil 32, and a resonance circuit that includes the power reception coil 41 is set to 150 kHz.

Coil Switching Method

Switching of the driver coil 31 and the power reception coil 41 was performed using the above-described first switching method. That is, the controller 92 calculates the reflection ratio "S" based on the traveling wave voltage $V_F$ and the reflected wave voltage $V_R$ detected by the reflected power detecting unit 37, and Equations 4, 5.
When the reflection ratio "S" is a predetermined value (for instance, 5%) or more, the controller 92 calculates the actual value of the load side impedance "$Z_0$" based on the traveling wave voltage $V_F$, the reflected wave voltage $V_R$, and Equation 6.
Next, the controller 92 changes the coupling coefficient "$k_{01}$" of the driver coil 31 and the power transmission coil 32 by switching the driver coil unit 31A to 31F of the driver coil 31 so that the difference between the theoretic value of the load side impedance "$Z_0$" calculated from Equation 8 and the actual value of the load side impedance "$Z_0$" falls within a specified range, and changes the inductance "$L_2$" of the power reception coil 41 by switching the coil regions 41A to 41D of the power reception coil 41.
Further, after switching the coil regions 41A to 41D of the power reception coil 41, the reflected power detecting unit 37 detects the traveling wave voltage $V_F$ and the reflected wave voltage $V_R$ again, and the controller 92 calculates the reflection ratio "S" again based on the traveling wave voltage $V_F$ and the reflected wave voltage $V_R$ detected by the reflected power detecting unit 37 and Equations 4, 5.
When the power reflection ratio "S" maintains a predetermined value (for instance 5%) or more, fine adjustment was performed by repeatedly switching the driver coil 31 and the power reception coil 41 similarly to the above-described first switching of the driver coil 31 and the power reception coil 41 until the power reflection ratio "S" reached the predetermined value or less.

Experimental Procedures

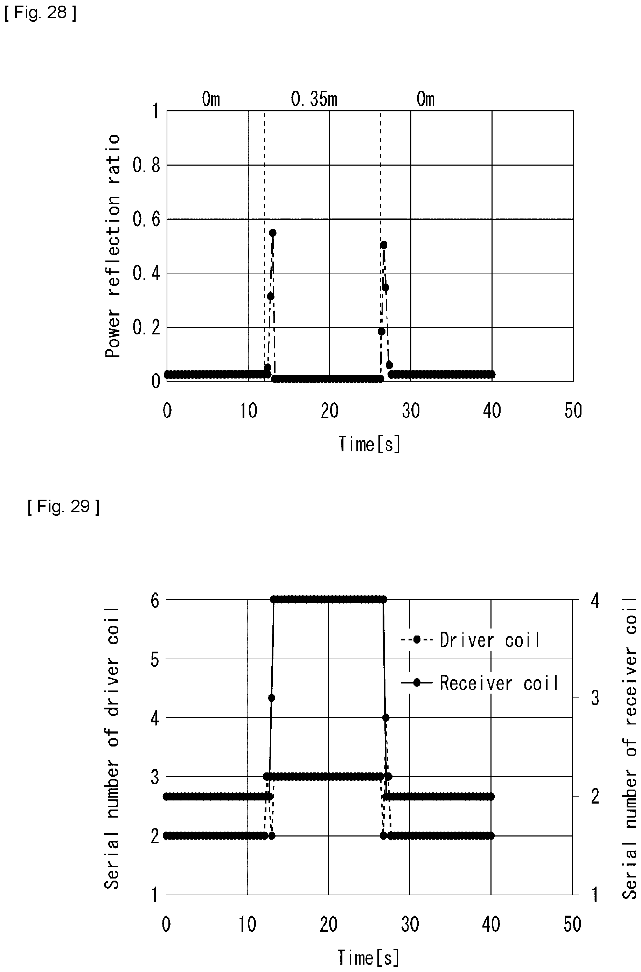

First, in a state the driver coil 31 was set to the driver coil unit 31B and the power reception coil 41 was set to the coil region 41C, the distance between the power transmission coil 32 and the power reception coil 41 was maintained for approximately 12 seconds at 0 mm, and the distance between the power transmission coil 32 and the power reception coil 41 was separated up to 350 mm over a period of approximately 1 second. Then, the distance between the power transmission coil 32 and the power reception coil 41 was maintained for approximately 15 seconds at 350 mm, and the distance between the power transmission coil 32 and the power reception coil 41 was moved closer up to 0 mm over a period of approximately 1 second. Transitions of the power reflection ratio of the present experiment are shown in FIG. 28. Also, the history of switching the driver coil units 31A to 31F of the driver coil 31 and the coil regions 41A to 41D of the power reception coil 41 of the present experiment is shown in FIG. 29.

In FIG. 29, "1" to "6" on the left vertical axis correspond to the driver coil units 31A to 31F of the driver coil 31, respectively, the driver coil unit 31A corresponds to "1", the driver coil unit 31B to "2", the driver coil unit 31C to "3", the driver coil unit 31D to "4", the driver coil unit 31E to "5", and the driver coil unit 31F to "6". Also, in FIG. 29, "1" to "4" on the right vertical axis correspond to the coil regions 41A to 41D of the power reception coil 41, respectively, the coil region 41A corresponds to "4", the coil region 41B to "3", the coil region 41C to "2", and the coil region 41D to "1".

Experimental Results

According to FIG. 28, it can be seen that when the distance between the power transmission coil 32 and the power reception coil 41 was separated from 0 mm to 350, the power reflection ratio rose to approximately 0.55 (55%), but dropped to 0.05 or less (5% or less) in approximately 1 second, and this state is maintained thereafter. It can also be seen that when the moving the distance between the power transmission coil 32 and the power reception coil 41 closer from 350 mm to 0 mm, the power reflection ratio rose to approximately 0.52 (52%) but dropped to 0.05 or less (5% or less) in approximately 1 second, and this state is maintained thereafter.

Also, according to FIG. 29, it can be seen that when the distance between the power transmission coil 32 and the power reception coil 41 was separated from 0 mm to 350, the driver coil 31 was switched three times and the power reception coil 41 twice, including the above-described fine adjustment. It can also be seen that when the distance between the power transmission coil 32 and the power reception coil 41 was moved closer from 350 m to 0 mm, the driver coil 31 was switched three times and the power reception coil 41 twice.

In this manner, according to the present experimental results, the power reflection ratio reduces to 5% or less within 1 minute in all of the cases the distance between the power transmission coil 32 and the power reception coil 41 was separated and moved closer, and it can be seen that impedance matching was performed very smoothly in response to changes in the distance between the power transmission coil 32 and the power reception coil 41.

<Example 5>

Similarly to Example 4, the wireless power feeding system 1A was used to perform an experiment (Example 5) to perform impedance matching by automatically switching the driver coil units 31A to 31F of the driver coil 31 and the coil regions 41A to 41D of the power reception coil 41 when the distance between the power transmission coil 32 and the power reception coil 41 was changed.

Switching of the driver coil 31 and the power reception coil 41 in this experiment was performed by the above-described third switching method. That is, the controller 92 first calculates the power reflection coefficient ($\Gamma$) and power reflection ratio "S" from values of the traveling wave voltage $V_F$ and the reflected wave voltage $V_R$ detected by the reflected power detecting unit 37 based on Equations 4, 5.

The driver coil units 31A to 31F of the driver coil 31 and the coil regions 41A to 41D of the power reception coil 41 are sequentially switched by one stage at a time when the power reflection coefficient ($\Gamma$) is a predetermined value (for instance, +0.22) or more and the power reflection ratio "S" is a predetermined value (for instance 5%) or more. It should be noted that in the present experiment, switching the driver coil 31 was prioritized over switching the power reception coil 41.

The controller 92 calculates the power reflection coefficient ($\Gamma$) and power reflection ratio "S" again from values of the traveling wave voltage $V_F$ and the reflected wave voltage $V_R$ detected by the reflected power detecting unit 37 based on Equations 4, 5.

When the power reflection ratio "S" maintains a predetermined value (for instance 5%) or more, fine adjustment was performed by repeatedly switching the driver coil 31 and the power reception coil 41 similarly to the above-described first switching of the driver coil 31 and the power reception coil 41 until the power reflection ratio "S" reached the predetermined value or less.

Experimental Procedures

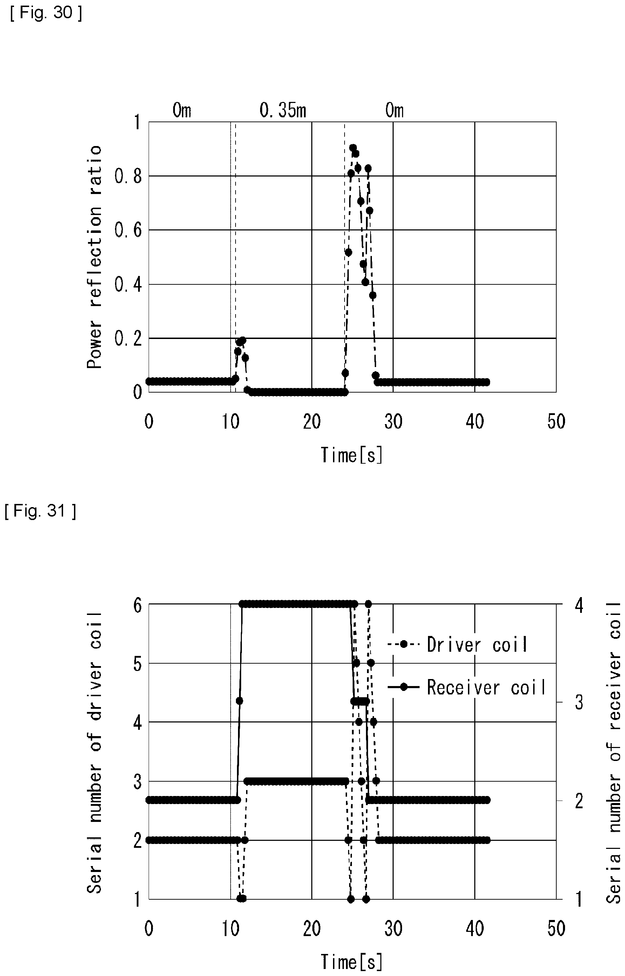

First, in a state the driver coil 31 was set to the driver coil unit 31B and the power reception coil 41 was set to the coil region 41C, the distance between the power transmission coil 32 and the power reception coil 41 was maintained for approximately 11 seconds at 0 mm, and the distance between the power transmission coil 32 and the power reception coil 41 was separated up to 350 mm over a period of approximately 1 second. Then, the distance between the power transmission coil 32 and the power reception coil 41 was maintained for approximately 15 seconds at 350 mm, and the distance between the power transmission coil 32 and the power reception coil 41 was moved closer up to 0 mm over a period of approximately 1 second. Transitions of the power reflection ratio of the present experiment are shown in FIG. 30. Also, the history of switching the driver coil units 31A to 31F of the driver coil 31 and the coil regions 41A to 41D of the power reception coil 41 of the present experiment is shown in FIG. 31.

Experimental Results

According to FIG. 30, it can be seen that when the distance between the power transmission coil 32 and the power reception coil 41 was separated from 0 mm to 350, the power reflection ratio rose to approximately 0.20 (20%) but dropped to 0.05 or less (5% or less) in approximately 2 seconds, and this state is maintained thereafter. It can also be seen that when the distance between the power transmission coil 32 and the power reception coil 41 is moved closer from 350 mm to 0 mm, the power reflection ratio rose to approximately 0.90 (90%) but dropped to 0.05 or less (5% or less) in approximately 5 seconds, and this state is maintained thereafter.

Also, according to FIG. 31, it can be seen that when the distance between the power transmission coil 32 and the power reception coil 41 was separated from 0 mm to 350, the driver coil 31 switched twice and the power reception coil 41 twice, including the above-described fine adjustment. It can also be seen that when the distance between the power transmission coil 32 and the power reception coil 41 moved closer from 350 mm to 0 mm, the driver coil 31 was switched 13 times and the power reception coil 41 twice.

In this manner, according to the present experimental results, the power reflection ratio reduced to 5% or less within 5 minutes in both of the case that the distance between the power transmission coil 32 and the power reception coil 41 was separated and the case that the distance was brought closer, and it can be said that impedance matching is performed very smoothly in response to changes in the distance between the power transmission coil 32 and the power reception coil 41. However, when compared to the experimental results of Example 4, the time required for the power reflection ratio to stabilize at 5% or less is longer, and it can be seen that Example 4 shows better response.

<Example 6>

Similarly to Example 4, the wireless power feeding system 1A was used to perform an experiment (Example 6) to confirm states up to impedance matching at the time of starting the system up. Switching of the driver coil 31 and the power reception coil 41 was performed by the first switching method similarly to Example 4.

Experimental Procedures

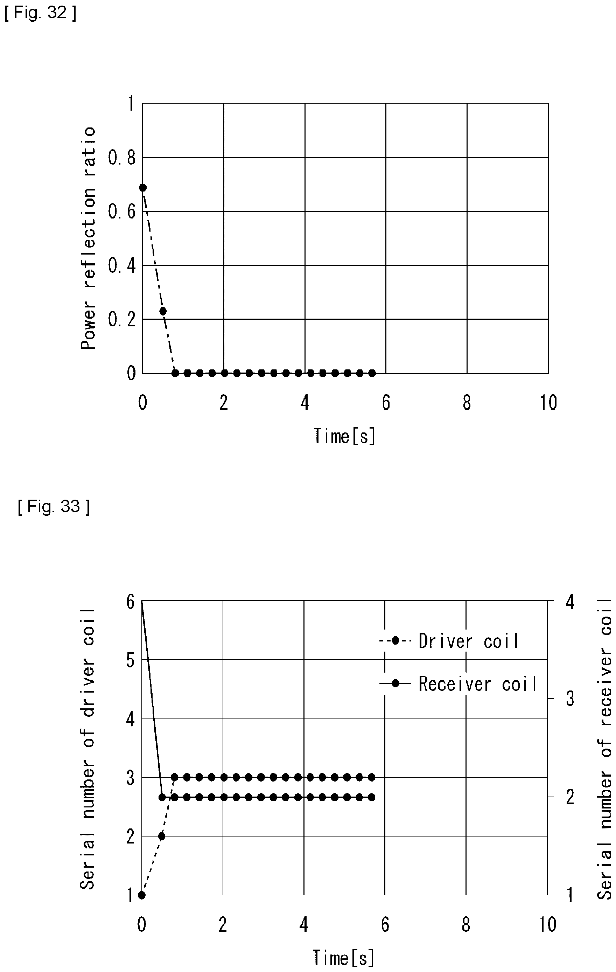

First, the driver coil 31 was set to the driver coil unit 31A and the power reception coil 41 was set to the coil region 41A, and from this initial state, the power source was turned ON with the distance between the power transmission coil 32 and the power reception coil 41 being 50 mm and the load resistance 50 Ω. Transitions of the power reflection ratio of the present experiment are shown in FIG. 32. Also, the history of switching the driver coil units 31A to 31F of the driver coil 31 and the coil regions 41A to 41D of the power reception coil 41 of the present experiment is shown in FIG. 33.

Experimental Results

According to FIG. 32, it can be seen that while the power reflection ratio was approximately 0.70 (70%) in the initial state, it dropped to approximately 0.05 or less (5% or less) in approximately 0.8 seconds, and this state was maintained thereafter. Also, according to FIG. 33, it can be seen that the driver coil 31 was switched twice and the power reception coil 41 once.

In this manner, according to the present experimental results, it can be seen that the impedance reached a matched state within 1 second with a power reflection ratio of 5% or less, and that the system was mostly smoothly started up.

<Example 7>

Similarly to Example 4, the wireless power feeding system 1A was used to perform an experiment (Example 7) to confirm states up to impedance matching at the time of starting up the system. Switching of the driver coil 31 and the power reception coil 41 was performed by the third switching method similarly to Example 5.

Experimental Procedures

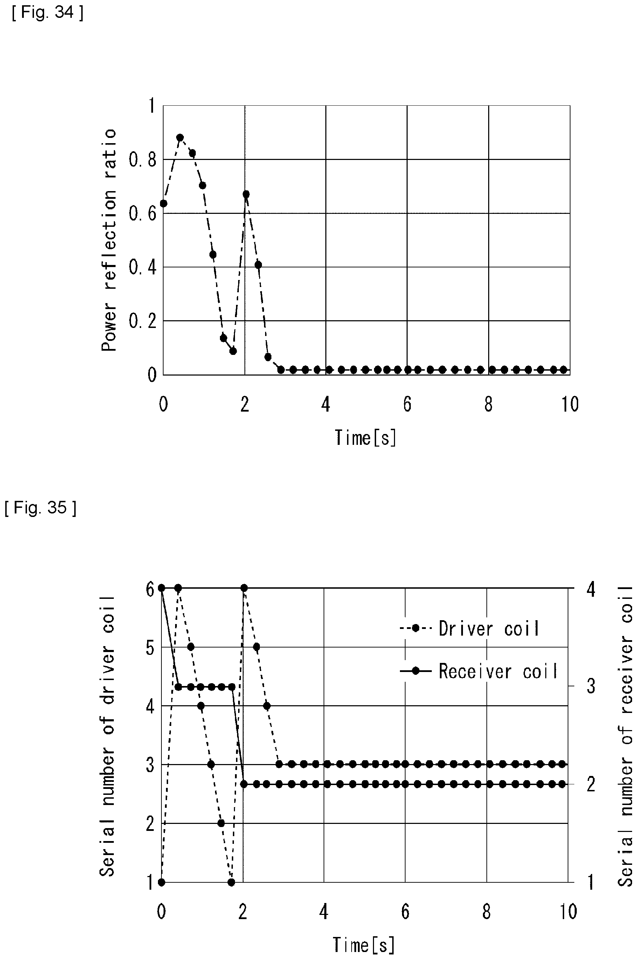

First, the driver coil 31 was set to the driver coil unit 31A and the power reception coil 41 was set to the coil region 41A, and from this initial state, the power source was turned ON with the distance between the power transmission coil 32 and the power reception coil 41 being 50 mm and the load resistance 50 Ω. Transitions of the power reflection ratio of the present experiment are shown in FIG. 34. Also, the history of switching the driver coil units 31A to 31F of the driver coil 31 and the coil regions 41A to 41D of the power reception coil 41 of the present experiment is shown in FIG. 35.

Experimental Results

According to FIG. 34, it can be seen that the power reflection ratio was approximately 0.62 (62%) in the initial state and after it once rose up to 0.90 (90%), it dropped to approximately 0.05 or less (5% or less) in approximately 2.8 seconds, and this state is maintained thereafter. Also, according to FIG. 35, it can be seen that the driver coil 31 was switched 10 times and the power reception coil 41 twice.

In this manner, according to the present experimental results, it can be seen that the impedance reached a matched state within 3 seconds with a power reflection ratio of 5% or less and that the system was started up in a mostly smooth manner. However, when compared to the experimental results of Example 6, the time required for the power reflection ratio to stabilize at 5% or less is longer, and it can be seen that Example 6 shows better response.

<Example 8>

Similarly to Example 4, the wireless power feeding system 1A was used to perform an experiment (Example 8) to perform impedance matching by automatically switching the driver coil units 31A to 31F of the driver coil 31 and the coil regions 41A to 41D of the power reception coil 41 when the value of the load resistance of the load 8 is changed in a state the distance between the power transmission coil 32 and the power reception coil 41 is fixed at 50 mm. In the present experiment, switching of the driver coil 31 and the power reception coil 41 was performed by the third switching method similarly to Example 5. Also, the power source frequency was set to 150 kHz.

Experimental Procedures

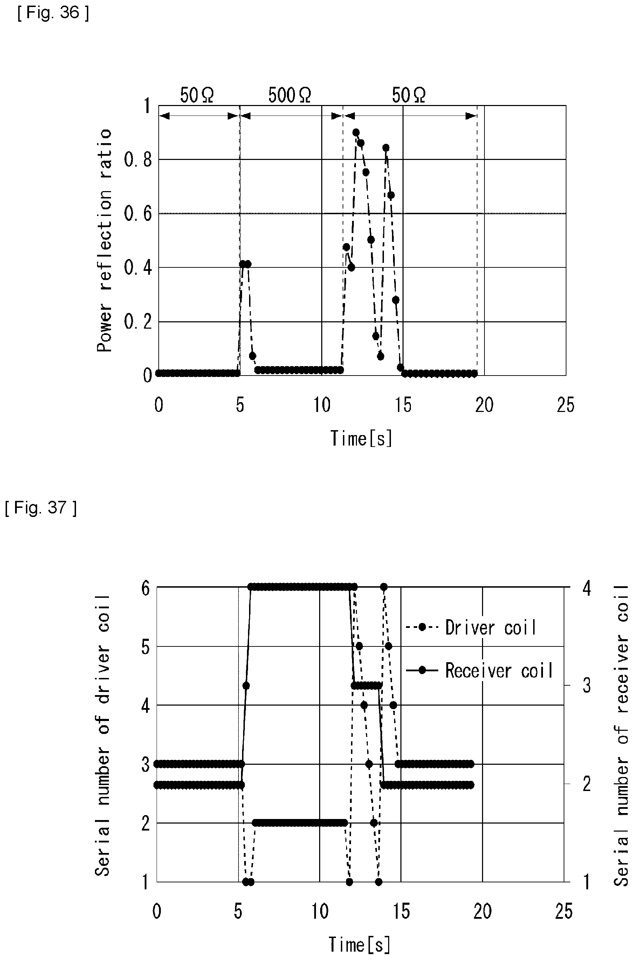

First, set the driver coil 31 to the driver coil unit 31C and set the power reception coil 41 to the coil region 42C, and from this initial state, maintain the load resistance at 50 Ω for approximately 5 seconds and then raise the load resistance up to 500 Ω. Next, the load resistance was maintained at 500 Ω for approximately 6 seconds and then the load resistance was dropped again to 500 Ω. Transitions of the power reflection ratio of the present experiment are shown in FIG. 36. Also, the history of switching the driver coil units 31A to 31F of the driver coil 31 and the coil regions 41A to 41D of the power reception coil 41 of the present experiment is shown in FIG. 37.

Experimental Results

According to FIG. 36, it can be seen that while the power reflection ratio rose to approximately 0.41 (41%) when the load resistance rose from 50 Ω to 500 Ω, it dropped to approximately 0.05 or less (5% or less) in approximately 2 seconds, and this state was maintained thereafter. Also, it can be seen that while the power reflection ratio rose to approximately 0.91 (91%) when the load resistance dropped from 50 Ω to 500 Ω, it dropped to approximately 0.05 or less (5% or less) in approximately 4 seconds, and this state was maintained thereafter.

Also, according to FIG. 37, it can be seen that when the load resistance rose from 50 Ω to 500 Ω, the driver coil 31 was switched twice and the power reception coil 41 twice. Also, it can be seen that when the load resistance dropped from 500 Ω to 50 Ω, the driver coil 31 was switched 10 times and the power reception coil 41 twice.

In this manner, according to the present experimental results, in both of the case that the load resistance was raised and the case that it was dropped, an impedance matching state was reached in which the power reflection ratio dropped to 5% or less within 5 seconds, and it can be seen that impedance matching can be smoothly performed, for instance, even when the load side impedance "$Z_0$" fluctuates with progresses in charging the battery of the load 8.

<Example 9>

Similarly to Example 4, the wireless power feeding system 1A was used to perform an experiment (Example 9) to perform impedance matching by automatically switching the driver coil units 31A to 31F of the driver coil 31 and the coil regions 41A to 41D of the power reception coil 41 when the distance between the power transmission coil 32 and the power reception coil 41 is continuously changed. In the present experiment, switching of the driver coil 31 and the power reception coil 41 was performed by the first switching method similarly to Example 4.

Experimental Procedures

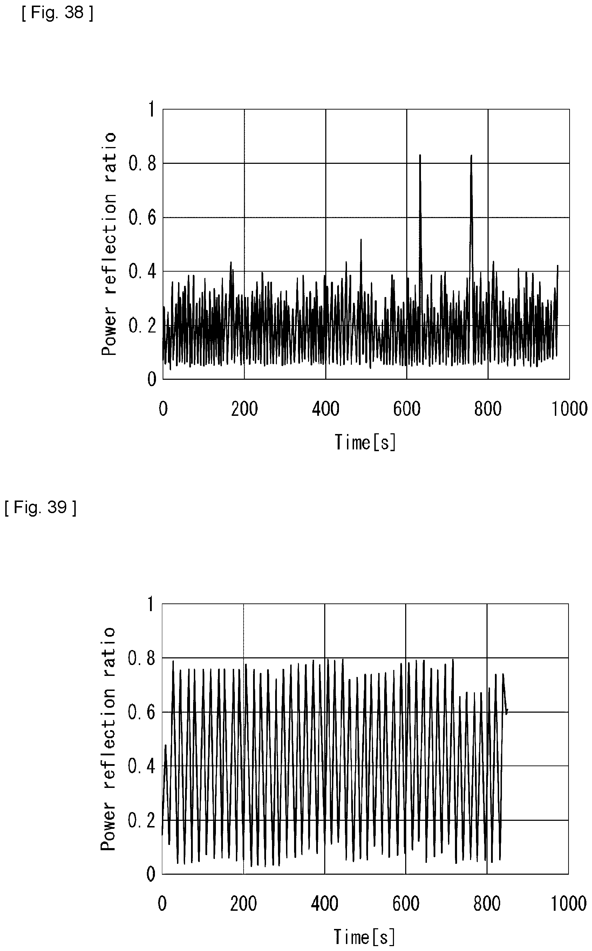

Make the object of power supply 2 a self-propelled automatic guided vehicle (AGV) and make the object of power supply 2 equipped with a battery charged with desired power as the load 8. Set the power reception coil 41 equipped in the object of power supply 2 to the coil region 42C, set the driver coil 31 equipped in the power transmission device 3 to the driver coil unit 31B, and from this initial state, maintain the distance between the power transmission coil 32 and the power reception coil 41 at 150 mm for approximately 2 seconds, and then extend the distance to 200 mm over a period of approximately 1 second. Thereafter, maintain the distance between the power transmission coil 32 and the power reception coil 41 for approximately 2 seconds at 200 mm and then extend the distance to 300 mm over a period of approximately 1 second. Thereafter, the distance between the power transmission coil 32 and the power reception coil 41 was maintained for approximately 2 seconds at 300 mm and then the distance was made closer to 150 mm over a period of approximately 1 second. This series of procedures was repeated until the power of the battery (the load 8) fell below a predetermined value and the automatic guided vehicle (the object of power supply 2) came to a standstill. Transitions of the power reflection ratio of the present experiment are shown in FIG. 38.

Experimental Results

In the present experiment, the object of power supply 2 came to a standstill in 16 minutes 10 seconds (970 seconds). Also, according to FIG. 38, it can be seen that the power reflection ratio periodically changes in a range of approximately 0.07 (7%) to 0.40 (40%) accompanying the movements of the object of power supply 2. Also, an average value of the power reflection ratio until the object of power supply 2 came to a standstill was 0.132 (13.2%).

<Comparative Example 1>

An experiment (Comparative Example 1) with the same configuration as in Example 6 of measuring the power reflection ratio until the automatic guided vehicle (the object of power supply 2) came to a standstill and the time until the object of power supply 2 came to a standstill was performed without switching but fixing the driver coil 31 and the power reception coil 41 when continuously changing the distance between the power transmission coil 32 and the power reception coil 41. Transitions of the power reflection ratio of the present experiment are shown in FIG. 30.

Experimental Results

In the present experiment, the object of power supply 2 came to a standstill in 14 minutes 7 seconds (847 seconds). Also, according to FIG. 39, it can be seen that the power reflection ratio periodically changed in a range of approximately 0.05 (5%) to 0.80 (80%) accompanying the movements of the object of power supply 2. Also, an average value of the power reflection ratio until the object of power supply 2 came to a standstill was 0.444 (44.4%).

<Comparative Example 2>

With the same configuration as in Example 6, an experiment (Comparative Example 2) was performed to measure the time until an automatic guided vehicle (the object of power supply 2) equipped with the power reception coil 41 and the battery (the load 8) came to a standstill when the automatic guided vehicle ran with only the power charged to the battery without performing wireless power supply.

Experimental Results

In the present experiment, the object of power supply 2 came to a standstill in 8 minutes 58 seconds (538 seconds).
Comparing the experimental results of Example 9 and Comparative Examples 1 and 2, the automatic guided vehicle in Example 9 is capable of driving longer than that of Comparative Example 1 by 123 seconds, and the operating time is longer by approximately 15%. Also, the automatic guided vehicle in Example 9 is capable of driving longer than that of Comparative Example 2 by 432 seconds, and the operating time is longer by approximately 80%. That is, Example 9 is capable of quickly performing impedance matching and of continuously supplying power even when the object of power supply 2 is continuously moving.

<Example 10>

Similarly to Example 4, the wireless power feeding system 1A was used to perform an experiment (Example 10) to perform impedance matching by automatically switching the driver coil units 31A to 31F of the driver coil 31 and the coil regions 41A to 41D of the power reception coil 41 when the distance between the power transmission coil 32 and the power reception coil 41 was continuously changed at random. Switching of the driver coil 31 and the power reception coil 41 was performed by the first switching method similarly to Example 4.

Experimental Procedures

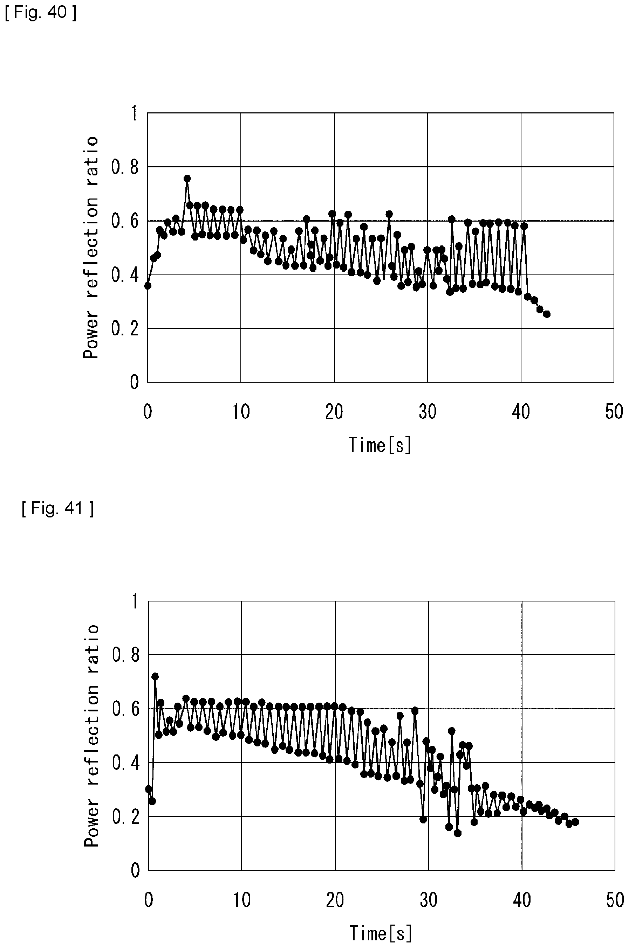

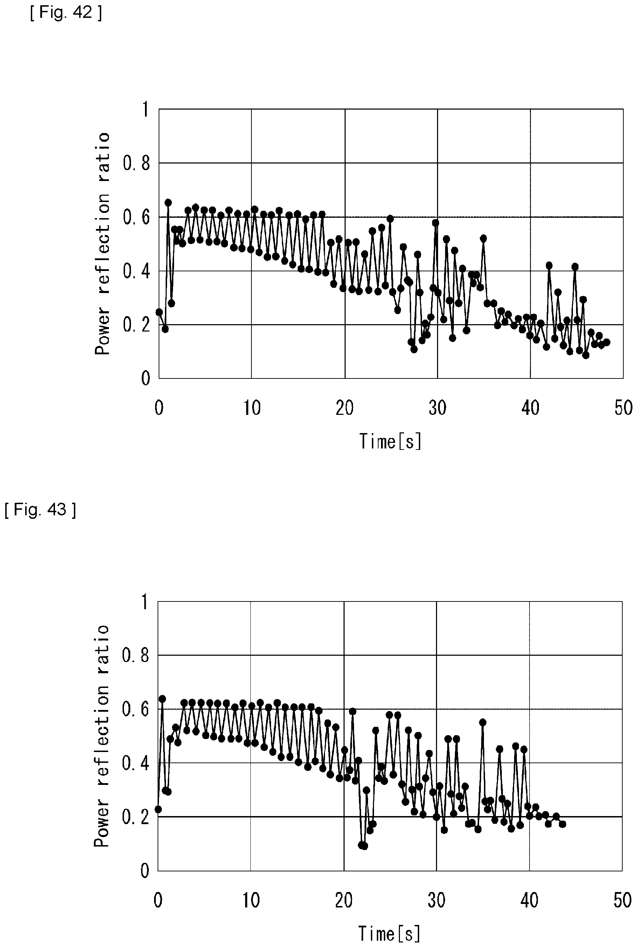

Make the object of power supply 2 a self-propelled automatic guided vehicle (AGV) and make the object of power supply 2 equipped with a battery charged with desired power as the load 8. Arrange a stage of 900 mm by 900 mm separate from the power transmission device 3 by 200 mm, on which stage the object of power supply 2 moves at random. The object of power supply 2 can translate on the stage and is also capable of changing directions by rotating around a rotating axis perpendicular to the stage. The power reception coil 41 equipped in the object of power supply 2 was set to the coil region 42C and the driver coil 31 equipped in the power transmission device 3 was set to the driver coil unit 31B, and from this initial state, the object of power supply 2 started movements, and this was repeated until the power of the battery (the load 8) fell below a predetermined value and the automatic guided vehicle (the object of power supply 2) came to a standstill. The sequence of this experiment was performed for four times. Transitions of the power reflection ratio in the four experiments are shown in FIG. 40 to Fig 43.

Experimental Results

The time measured in each of the four experiments until the object of power supply 2 came to a standstill was 43 seconds, 46 seconds, 48 seconds, and 43 seconds, and the average was 45 seconds. Also, according to FIG. 40 to FIG. 43, it can be seen that the power reflection ratio of Example 7 repeats peaks and valleys constantly and that impedance matching and mismatching are repeated following operations of the object of power supply 2.

<Comparative Example 3>

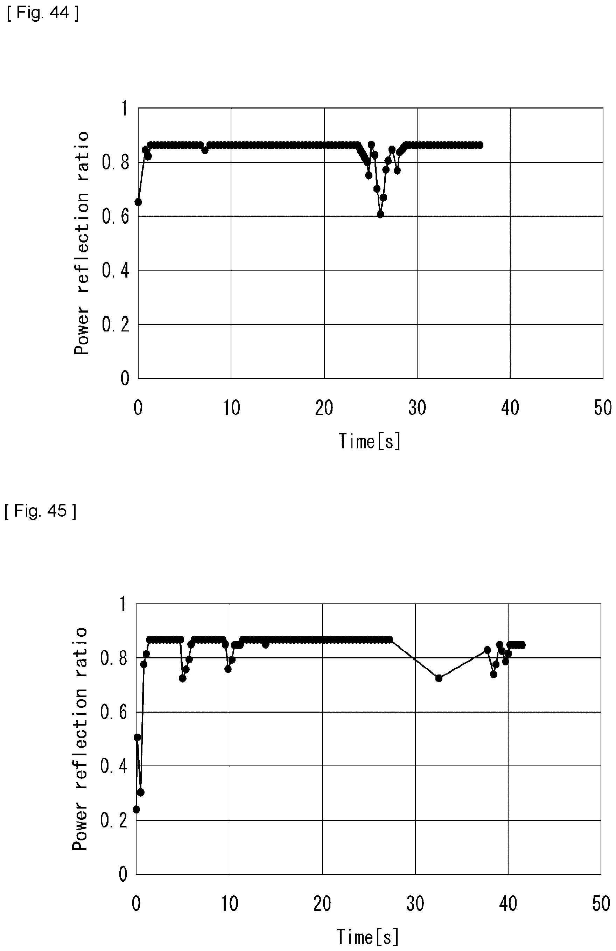

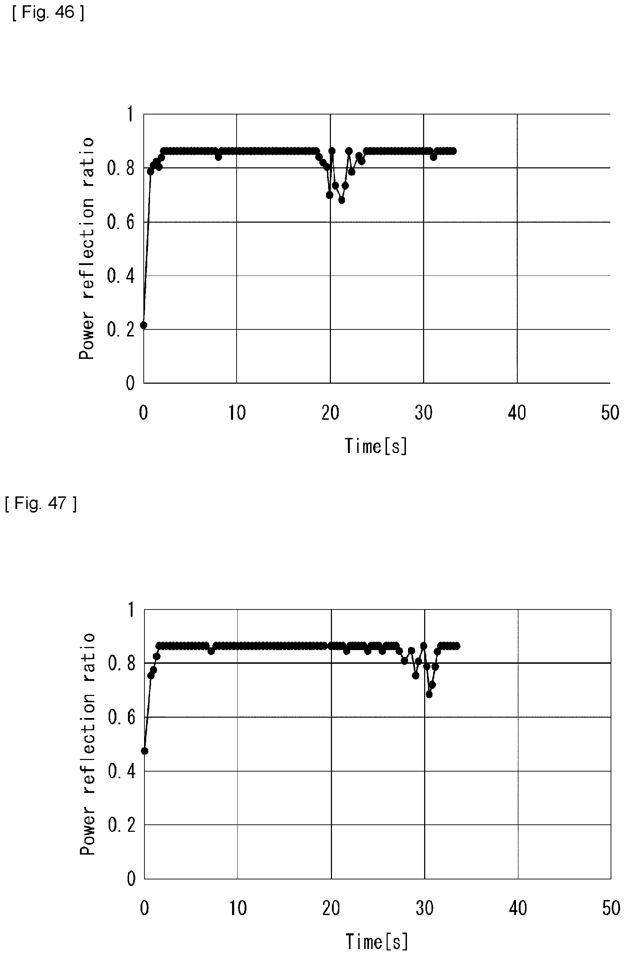

With the same configuration as in Example 7, an experiment (Comparative Example 3) to measure the power reflection ratio until the automatic guided vehicle (the object of power supply 2) came to a standstill without switching but fixing the driver coil 31 and the power reception coil 41 when the distance between the power transmission coil 32 and the power reception coil 41 was continuously changed at random was performed four times. Transitions of the power reflection ratio in the four experiments are shown in FIG. 44 to FIG. 47.

Experimental Results

The time measured in each of the four experiments until the object of power supply 2 came to a standstill was 36 seconds, 41 seconds, 33 seconds, and 33 seconds, and the average was 35.75 seconds. Also, according to FIG. 44 to FIG. 47, the power reflection ratio of Comparative Example 3 was 0.8 (80%) or more for most of the time, so that it can be seen that the impedance matching did not catch up with the operation of the automatic guided vehicle.

<Comparative Example 4>

With the same configuration as in Example 7, an experiment (Comparative Example 4) was performed four times to measure the time until an automatic guided vehicle (the object of power supply 2) equipped with the power reception coil 41 and the battery (the load 8) came to a standstill when the automatic guided vehicle ran with only the power charged to the battery without performing wireless power supply.

Experimental Results

The time measured in each of the four experiments until the object of power supply 2 came to a standstill was 33 seconds, 36 seconds, 34 seconds, and 28 seconds, and the average was 32.75 seconds.

Comparing the experimental results of Example 10 and the Comparative Examples 3 and 4, Example 10 is capable of driving longer than Comparative Example 3 by 9.25 seconds in average, and the operating time is longer by approximately 12.6%. Also, the time of performing impedance matching in Example 10 is longer than that of Comparative Example 3 which enables it to make the operating time of the automatic guided vehicle longer. Also, Example 10 is capable of driving longer by 12.75 seconds than the Comparative Example 4, and the operating time is longer by approximately 13.7%.

Also, there was no large difference between the results of Comparative Examples 3 and 4. This is because the object of power supply 2 can hardly be charged since in the case of a wireless power feeding system that does not switch the driver coil units 31A to 31F of the driver coil 31 and the coil regions 41A to 41D of the power reception coil 41 as in Comparative Example 3, impedance matching cannot catch up with a constantly moving object of power supply 2 for most of the time. On the other hand, since Example 10 realizes impedance matching even for the constantly moving object of power supply 2, it is possible to continuously supply power.

<Example 11>

Similarly to Example 4, the wireless power feeding system 1A was used to perform an experiment (Example 11) to perform impedance matching by automatically switching only the driver coil units 31A to 31F of the driver coil 31 when the distance between the power transmission coil 32 and the power reception coil 41 was continuously changed at random. Switching of the driver coil 31 was performed by the first switching method similarly to Example 4.

Experimental Procedures

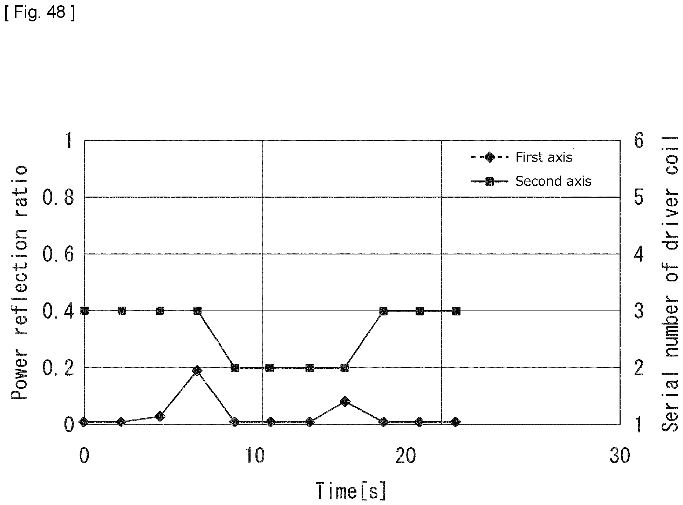

First, in a state the driver coil 31 was set to the driver coil unit 31C and the power reception coil 41 was set to the coil region 41C, the distance between the power transmission coil 32 and the power reception coil 41 was maintained at 350 mm for approximately 6 seconds, and then the distance between the power transmission coil 32 and the power reception coil 41 was made closer to 250 mm over a period of approximately 1 second. Then, the distance between the power transmission coil 32 and the power reception coil 41 was maintained at 250 mm for approximately for 7 seconds, and then the distance between the power transmission coil 32 and the power reception coil 41 was extended to 350 mm over a period of approximately 1 second. Transitions of the power reflection ratio of the present experiment and the history of switching the driver coil units 31A to 31F of the driver coil 31 are shown in FIG. 48.

Experimental Results

According to FIG. 48, it can be seen that when the distance between the power transmission coil 32 and the power reception coil 41 was made closer from 350 mm to 250 mm, the power reflection ratio rose to approximately 0.20 (20%) but dropped to 0.05 or less (5% or less) in approximately 2 seconds because the driver coil unit 31C (serial number 3 in FIG. 48) was switched to the driver coil unit 31B (serial number 2 in FIG. 48), and that this state was maintained thereafter. Also, it can be seen that when the distance between the power transmission coil 32 and the power reception coil 41 was extended from 250 mm to 350 mm, the power reflection ratio rose to approximately 0.10 (10%) but dropped to 0.05 or less (5% or less) in approximately 2 seconds because the driver coil unit 31B was switched to the driver coil unit 31C, and that this state was maintained thereafter.

According to the present experimental results, when the fluctuation of the distance between the power transmission coil 32 and the power reception coil 41 was about 100 mm, the power reflection ratio dropped to 5% or less within 2 seconds even in the case of switching the driver coil units 31B, 31C only, so that it is possible to say that impedance matching was performed in a mostly smooth manner.

Also, the present invention can be modified in various ways other than those described above, as long as the spirit of the invention is not departed from, and it is natural that the present invention extends to those with such modifications.

**List of Reference** Signs

1A, 1B, 1C, 1D, 1E: Wireless power feeding system
11: Wireless power receiving system
2: Object of power supply
3: Power transmission device
31: Driver coil
31A to 31H: Driver coil unit
31a to 31c: Coil axis (of driver coil)
32: Power transmission coil
32a: Coil axis (of power transmission coil)
33, 34: Capacitor

35: Driving unit
36: Power transmitting unit
37: Reflected power detecting unit
38: Relative position measuring unit
4: Power reception device
41: Power reception coil
41A, 41B, 41C, 41D: Coil region
42: Capacitor
43: Power reception unit
5: AC power source
5A: Power source device
6: Rectifying circuit
61: Diode
62: Capacitor
7: DC-DC converter
8: Load
9: Impedance matching mechanism
91a to 91f: Switch
92: Controller
93: Storing unit
94: Controlling unit
95a, 95b, 95c, 95d: MOSFET
96: Measuring unit
IE: Input end

**Claims**

1. A wireless power feeding system comprising:

   a power transmission device comprising a power transmission-side resonance circuit that includes a power transmission coil;
   a power reception device comprising a power reception unit that has a power reception-side resonance circuit including a power reception coil and that is connectable to a load to which power received by the power reception coil is supplied; and
   a controller for controlling the power reception unit,
   the wireless power feeding system transmitting and receiving power between the power transmission coil and the power reception coil using a magnetic field resonance method,
   **characterized in that** the power reception coil is configured to be capable of selecting a plurality of coil regions that have different numbers of coil windings in accordance with connecting positions of a plurality of terminals provided at the power reception coil, and
   that the controller changes an inductance of the power reception coil by switching the plurality of terminals to mitigate a difference between a load side impedance, which is an impedance from an input end of the power transmission device to a circuit on a load side, and an input side impedance, which is an impedance from an input end of the power transmission device to a circuit on a power source device side.

2. The wireless power feeding system as claimed in claim 1, **characterized in that** the controller adjusts, by switching the plurality of terminals, an inductance of the coil region selected and a capacitance of a capacitor disposed in series with the coil region selected so that a magnetic resonance between the power transmission coil and the power reception coil can be maintained.

3. The wireless power feeding system as claimed in claim 1, **characterized in that** the power transmission device further comprises a driving unit having a driver coil provided to be capable of magnetic field coupling with the power transmission coil to transmit power to the power transmission coil using a magnetic field resonance method, and that the controller controls the driving unit to change coupling strength in magnetic field coupling of the power transmission coil and the driver coil.

4. The wireless power feeding system as claimed in claim 3, **characterized in that** the power transmission device further comprises a reflected power detecting unit disposed between the power source device and the driver coil to detect reflected power at the driver coil, and

that the controller controls the power reception unit or the driving unit in accordance with a magnitude of reflected power detected by the reflected power detecting unit.

5. The wireless power feeding system as claimed in claim 3, **characterized in that** the power reception device further comprises a measuring unit for measuring a load current or a load voltage at the load, and

that the controller controls the power reception unit or the driving unit in accordance with a value detected by the measuring unit.

6. The wireless power feeding system as claimed in claim 3, **characterized in that** the wireless power feeding system further comprises a relative position measuring unit for measuring a relative position of the power transmission coil and the power reception coil, and

that the controller controls the power reception unit or the driving unit in accordance with a value measured by the relative position measuring unit.

7. A wireless power feeding system comprising:

   a power source device comprising an AC power source;
   a power transmission device connected to the power source device at an input end and comprising a power transmission-side resonance circuit that includes a power transmission coil;
   a power reception device that comprises a power reception unit having a power reception-side resonance circuit including a power reception coil and that is connectable to a load to which power received by the power reception coil is supplied; and
   a controller for controlling the power reception unit,
   the wireless power feeding system transmitting and receiving power between the power transmission coil and the power reception coil using the magnetic field resonance method,
   **characterized in that** the power reception coil is configured to be capable of selecting a plurality of coil regions that have different numbers of coil windings in accordance with connecting positions of a plurality of terminals provided at the power reception coil,
   that the controller changes an inductance of the power reception coil by switching the plurality of terminals to mitigate a difference between a load side impedance, which is an impedance from an input end of the power transmission device to a circuit on a load side, and an input side impedance, which is an impedance from the input end of the power transmission device to a circuit on a power source device side,
   that the power transmission device further comprises a driving unit having a driver coil provided to be capable of magnetic field coupling with the power transmission coil to transmit power to the power transmission coil using a magnetic field resonance method, and
   that the controller controls the driving unit to change coupling strength in magnetic field coupling of the power transmission coil and the driver coil.

8. The wireless power feeding system as claimed in claim 7, **characterized in that** the power source device comprises a reflected power detecting unit disposed between the AC power source and an input end of the power transmission device to detect reflected power from the power transmission device side, and

that the controller controls the power reception unit or the driving unit in accordance with a magnitude of reflected power detected by the reflected power detecting unit.

9. The wireless power feeding system as claimed in claim 7, **characterized in that** the wireless power feeding system further comprises a reflected power detecting unit, inside which an input end of the power transmission device is located, that detects reflected power from the driver coil side, and

that the controller controls the power reception unit or the driving unit in accordance with a magnitude of reflected power detected by the reflected power detecting unit.

10. The wireless power feeding system as claimed in claim 1, **characterized in that** the power transmission device comprises a driving unit having a driver coil provided to be capable of magnetic field coupling with the power transmission coil to transmit power to the power transmission coil, and a reflected power detecting unit disposed between the power source device and the driver coil to detect reflected power at the driver coil, and

that the controller selects, based on a preliminarily stored correspondence between a power reflection ratio or power reflection coefficient that is calculated from the reflected power and an inductance of the power reception coil, a plurality of the coil regions by switching the plurality of terminals in accordance with the power reflection ratio or the power reflection coefficient.

11. The wireless power feeding system as claimed in claim 10, **characterized in that** the correspondence is based on a relational expression of an actual value of a load side impedance, which is an impedance from an input end of the power transmission device to a circuit on a load side and the power reflection ratio or the power reflection coefficient, and a relational expression of a theoretical value of the load side impedance and an inductance of the power reception coil, and
that the controller changes an inductance of the power reception coil to bring a theoretical value of the load side impedance closer to an actual value of the load side impedance that is calculated from the power reflection ratio or the power reflection coefficient.

12. The wireless power feeding system as claimed in claim 11, **characterized in that**, when the power reflection ratio or the power reflection coefficient calculated from a reflected power that the reflected power detecting unit has detected again after changing an inductance of the power reception coil is larger than a predetermined value, the controller changes an inductance of the power reception coil again so that a theoretical value of the load side impedance comes closer to an actual value of the load side impedance.

13. The wireless power feeding system as claimed in claim 10, **characterized in that** the driver coil transmits power to the power transmission coil using a magnetic field resonance method, and
that the controller controls the driving unit to change coupling strength in magnetic field coupling of the power transmission coil and the driver coil.

14. The wireless power feeding system as claimed in claim 13, **characterized in that** the controller selects, based on a preliminarily stored correspondence between a power reflection ratio or a power reflection coefficient calculated from the reflected power and a coil region of the power reception coil, a coil region of the power transmission coil corresponding to the calculated power reflection ratio or power reflection coefficient by switching the plurality of terminals.

15. The wireless power feeding system as claimed in claim 14, **characterized in that** the driver coil transmits power to the power transmission coil using a magnetic field resonance method, and
that the controller controls the driving unit so as to change coupling strength in magnetic field coupling of the power transmission coil and the driver coil.

16. The wireless power feeding system as claimed in claim 1, **characterized in that** the power transmission device comprises a driving unit having a driver coil and provided to be capable of magnetic field coupling with the power transmission coil to transmit power to the power transmission coil, and a reflected power detecting unit disposed between the power source device and the driver coil to detect reflected power at the driver coil, and
that, when a power reflection coefficient calculated from the reflected power is larger than a predetermined value, the controller switches a plurality of the coil regions by switching the plurality of terminals so that an inductance of the power reception coil becomes larger by one stage compared to before switching, and when a power reflection coefficient calculated from the reflected power is smaller than a predetermined value, the controller switches a plurality of the coil regions by switching the plurality of terminals so that an inductance of the power reception coil becomes smaller by one stage compared to before switching.

17. The wireless power feeding system as claimed in claim 16, **characterized in that** the driver coil transmits power to the power transmission coil using a magnetic field resonance method, and
that the controller controls the driving unit so as to change coupling strength in magnetic field coupling of the power transmission coil and the driver coil.

18. A wireless power feeding system comprising:

a power transmission device comprising

a power transmitting side circuit that includes a power transmission coil,
a driving unit having a driver coil provided to be capable of magnetic field coupling with the power transmission coil to transmit power to the power transmission coil, and
a reflected power detecting unit disposed between a power source device and the driver coil to detect reflected power at the driver coil;

a power reception device comprising a power reception unit that has a power reception-side resonance circuit including a power reception coil and that is connectable to a load to which power received by the power reception coil is supplied; and
a controller for controlling the driving unit,
the wireless power feeding system transmitting and receiving power between the power transmission coil and the power reception coil using a magnetic field resonance method,
**characterized in that** the driver coil is configured to be capable of selecting a plurality of driver coil units and transmits power to the power transmission coil using a magnetic field resonance method, and
that the controller switches, based on a preliminarily stored correspondence between a power reflection ratio or a power reflection coefficient that is calculated from the reflected power and coupling strength in magnetic field coupling of the power transmission coil and the driver coil, the plurality of driver coil units in accordance with the power reflection ratio or power reflection coefficient to change coupling strength in magnetic field coupling of the power transmission coil and the driver coil.

19. A wireless power receiving system that receives power transmitted from a power transmission device comprising a power transmission-side resonance circuit including a power transmission coil using a magnetic field resonance method,

**characterized in that** the wireless power receiving system comprises a power reception unit having a power reception-side resonance circuit including a power reception coil and is connectable to a load to which power received by the power reception coil is supplied,
that the power reception coil is configured to be capable of selecting a plurality of coil regions that have different numbers of coil windings in accordance with connecting positions of a plurality of terminals provided at the power reception coil, and
that a controller for controlling the power reception unit changes an inductance of the power reception coil by switching the plurality of terminals to mitigate a difference between a load side impedance, which is an impedance from an input end of the power transmission device to a circuit on a load side, and an input side impedance, which is an impedance from an input end of the power transmission device to a circuit on a power source device side.

20. The wireless power receiving system as claimed in claim 19, **characterized in that** the controller adjusts, by switching the plurality of terminals, an inductance of the coil regions selected and a capacitance of a capacitor disposed in series with the coil regions selected so that a magnetic resonance between the power transmission coil and the power reception coil can be maintained.

21. A wireless power feeding method using a wireless power feeding system comprising:

a power transmission device comprising a power transmission-side resonance circuit including a power transmission coil;
a power reception device that comprises a power reception unit having a power reception-side resonance circuit including a power reception coil, and that is connectable to a load to which power received by the power reception coil is supplied; and
a controller for controlling the power reception unit,
the wireless power feeding system transmitting and receiving power between the power transmission coil and the power reception coil using a magnetic field resonance method, **characterized in**
**that** the power reception coil is configured to be capable of selecting a plurality of coil regions that have different numbers of coil windings in accordance with connecting positions of a plurality of terminals provided at the power reception coil, and
**that** the controller changes an inductance of the power reception coil by switching the plurality of terminals to mitigate a difference between a load side impedance, which is an impedance from an input end of the power transmission device to a circuit on a load side, and an input side impedance, which is an impedance from an input end of the power transmission device to a circuit on a power source device side.

22. The wireless power feeding method as claimed in claim 21, **characterized in that** the power transmission device further comprises a driving unit having a driver coil provided to be capable of magnetic field coupling with the power transmission coil to transmit power to the power transmission coil using a magnetic field resonance method, and that the controller controls the driving unit so as to change coupling strength in magnetic field coupling of the power transmission coil and the driver coil.

**23.** The wireless power feeding method as claimed in claim 22, **characterized in that** adjustment of a load side impedance by the controller is performed by first performing rough adjustment by switching terminals of the power reception coil and then performing fine adjustment by controlling the driving unit.

**24.** The wireless power feeding method as claimed in claim 22, **characterized in that** the power transmission device comprises a driving unit having a driver coil provided to be capable of magnetic field coupling with the power transmission coil to transmit power to the power transmission coil, and a reflected power detecting unit disposed between the power source device and the driver coil to detect reflected power at the driver coil, and
that the controller selects, based on a preliminarily stored correspondence between a power reflection ratio or a power reflection coefficient calculated from the reflected power and an inductance of the power reception coil, a plurality of the coil regions by switching the plurality of terminals in accordance with the power reflection ratio or power reflection coefficient.

**25.** The wireless power feeding method as claimed in claim 24, **characterized in that** the driver coil transmits power to the power transmission coil using a magnetic field resonance method, and
that the controller controls the driving unit so as to change coupling strength in magnetic field coupling of the power transmission coil and the driver coil.

**26.** The wireless power feeding method as claimed in claim 25, **characterized in that** adjustment of a load side impedance by the controller is performed by first performing rough adjustment by switching terminals of the power reception coil and then performing fine adjustment by controlling the driving unit.

**27.** The wireless power feeding method as claimed in claim 24, **characterized in that** the power reception device is configured to be movable, and
that the power transmission device transmits power supplied from the power source device to the power reception coil while the power reception device is moving.

[ Fig. 1 ]

[ Fig. 2 ]

[ Fig. 3 ]

[ Fig. 4 ]

[ Fig. 5 ]

[ Fig. 6 ]

[ Fig. 7 ]

[ Fig. 8 ]

[ Fig. 9 ]

[ Fig. 10 ]

[ Fig. 11 ]

[ Fig. 12 ]

[ Fig. 13 ]

[ Fig. 14 ]

[ Fig. 15 ]

[ Fig. 16 ]

[ Fig. 18 ]

[Table 1]

| Distance between power transmission coil and power reception coil [mm] | Driver coil | Power reception coil |
|---|---|---|
| 350 | No.2-6 | No.1-1 |
| 300 | No.2-5 | No.1-1 |
| 250 | No.2-4 | No.1-1 |
| 200 | No.2-5 | No.1-2 |
| 150 | No.2-3 | No.1-2 |
| 100 | No.2-6 | No.1-3 |
| 50 | No.2-4 | No.1-3 |
| 0 | No.2-4 | No.1-4 |

[Table 2]

| Distance between power transmission coil and power reception coil [mm] | Driver coil | Power reception coil |
|---|---|---|
| 350 | No.2-8 | No.1-1 |
| 300 | No.2-7 | No.1-1 |
| 250 | No.2-7 | No.1-1 |
| 200 | No.2-6 | No.1-1 |
| 150 | No.2-4 | No.1-1 |
| 100 | No.2-5 | No.1-2 |
| 50 | No.2-7 | No.1-3 |
| 0 | No.2-5 | No.1-3 |

[ Fig. 19 ]

[Table 3]

| Distance between power transmission coil and power reception coil [mm] | Driver coil | Power reception coil |
|---|---|---|
| 350 | No.2-8 | No.1-1 |
| 300 | No.2-8 | No.1-1 |
| 250 | No.2-8 | No.1-1 |
| 200 | No.2-7 | No.1-1 |
| 150 | No.2-6 | No.1-1 |
| 100 | No.2-5 | No.1-1 |
| 50 | No.2-5 | No.1-2 |
| 0 | No.2-7 | No.1-3 |

[ Fig. 20 ]

[ Fig. 21 ]

[ Fig. 22 ]

[ Fig. 23 ]

[ Fig. 24 ]

[Table4]

| Distance between trasmitter coil and receiver coil [mm] | Driver coil | Receiver coil |
|---|---|---|
| 350 | No.3-3 | No.1-1 |
| 340 | No.3-3 | No.1-1 |
| 330 | No.3-3 | No.1-1 |
| 320 | No.3-3 | No.1-1 |
| 310 | No.3-3 | No.1-1 |
| 300 | No.3-3 | No.1-1 |
| 290 | No.3-3 | No.1-1 |
| 280 | No.3-3 | No.1-1 |
| 270 | No.3-2 | No.1-1 |
| 260 | No.3-2 | No.1-1 |
| 250 | No.3-2 | No.1-1 |
| 240 | No.3-2 | No.1-1 |
| 230 | No.3-1 | No.1-1 |
| 220 | No.3-3 | No.1-2 |
| 210 | No.3-3 | No.1-2 |
| 200 | No.3-3 | No.1-2 |
| 190 | No.3-3 | No.1-2 |
| 180 | No.3-2 | No.1-2 |
| 170 | No.3-2 | No.1-2 |
| 160 | No.3-2 | No.1-2 |
| 150 | No.3-2 | No.1-2 |
| 140 | No.3-4 | No.1-3 |
| 130 | No.3-4 | No.1-3 |
| 120 | No.3-3 | No.1-3 |
| 110 | No.3-3 | No.1-3 |
| 100 | No.3-3 | No.1-3 |
| 90 | No.3-3 | No.1-3 |
| 80 | No.3-3 | No.1-3 |
| 70 | No.3-3 | No.1-3 |
| 60 | No.3-2 | No.1-3 |
| 50 | No.3-2 | No.1-3 |
| 40 | No.3-2 | No.1-3 |
| 30 | No.3-3 | No.1-4 |
| 20 | No.3-3 | No.1-4 |
| 10 | No.3-3 | No.1-4 |
| 0 | No.3-2 | No.1-4 |

[ Fig. 25 ]

[Table5]

| Distance between trasmitter coil and receiver coil [mm] | Driver coil | Receiver coil |
|---|---|---|
| 350 | No.3-5 | No.1-1 |
| 340 | No.3-5 | No.1-1 |
| 330 | No.3-5 | No.1-1 |
| 320 | No.3-5 | No.1-1 |
| 310 | No.3-5 | No.1-1 |
| 300 | No.3-5 | No.1-1 |
| 290 | No.3-5 | No.1-1 |
| 280 | No.3-5 | No.1-1 |
| 270 | No.3-5 | No.1-1 |
| 260 | No.3-4 | No.1-1 |
| 250 | No.3-4 | No.1-1 |
| 240 | No.3-4 | No.1-1 |
| 230 | No.3-4 | No.1-1 |
| 220 | No.3-4 | No.1-1 |
| 210 | No.3-4 | No.1-1 |
| 200 | No.3-4 | No.1-1 |
| 190 | No.3-4 | No.1-1 |
| 180 | No.3-4 | No.1-1 |
| 170 | No.3-3 | No.1-1 |
| 160 | No.3-3 | No.1-1 |
| 150 | No.3-3 | No.1-1 |
| 140 | No.3-3 | No.1-1 |
| 130 | No.3-3 | No.1-1 |
| 120 | No.3-3 | No.1-1 |
| 110 | No.3-3 | No.1-1 |
| 100 | No.3-2 | No.1-1 |
| 90 | No.3-2 | No.1-1 |
| 80 | No.3-2 | No.1-1 |
| 70 | No.3-2 | No.1-1 |
| 60 | No.3-3 | No.1-2 |
| 50 | No.3-3 | No.1-2 |
| 40 | No.3-2 | No.1-2 |
| 30 | No.3-2 | No.1-2 |
| 20 | No.3-2 | No.1-2 |
| 10 | No.3-1 | No.1-2 |
| 0 | No.3-1 | No.1-3 |

[ Fig. 26 ]

[Table6]

| Distance between trasmitter coil and receiver coil [mm] | Driver coil | Receiver coil |
|---|---|---|
| 350 | No.3-6 | No.1-1 |
| 340 | No.3-6 | No.1-1 |
| 330 | No.3-6 | No.1-1 |
| 320 | No.3-6 | No.1-1 |
| 310 | No.3-6 | No.1-1 |
| 300 | No.3-6 | No.1-1 |
| 290 | No.3-6 | No.1-1 |
| 280 | No.3-6 | No.1-1 |
| 270 | No.3-6 | No.1-1 |
| 260 | No.3-6 | No.1-1 |
| 250 | No.3-6 | No.1-1 |
| 240 | No.3-6 | No.1-1 |
| 230 | No.3-6 | No.1-1 |
| 220 | No.3-6 | No.1-1 |
| 210 | No.3-6 | No.1-1 |
| 200 | No.3-5 | No.1-1 |
| 190 | No.3-5 | No.1-1 |
| 180 | No.3-5 | No.1-1 |
| 170 | No.3-5 | No.1-1 |
| 160 | No.3-5 | No.1-1 |
| 150 | No.3-5 | No.1-1 |
| 140 | No.3-5 | No.1-1 |
| 130 | No.3-5 | No.1-1 |
| 120 | No.3-5 | No.1-1 |
| 110 | No.3-4 | No.1-1 |
| 100 | No.3-4 | No.1-1 |
| 90 | No.3-4 | No.1-1 |
| 80 | No.3-4 | No.1-1 |
| 70 | No.3-4 | No.1-1 |
| 60 | No.3-4 | No.1-1 |
| 50 | No.3-4 | No.1-1 |
| 40 | No.3-3 | No.1-1 |
| 30 | No.3-3 | No.1-1 |
| 20 | No.3-3 | No.1-1 |
| 10 | No.3-3 | No.1-1 |
| 0 | No.3-3 | No.1-1 |

[ Fig. 27 ]

[ Fig. 28 ]

[ Fig. 29 ]

[ Fig. 30 ]

[ Fig. 31 ]

[ Fig. 32 ]

[ Fig. 33 ]

[ Fig. 34 ]

[ Fig. 35 ]

[ Fig. 36 ]

[ Fig. 37 ]

[ Fig. 38 ]

[ Fig. 39 ]

[ Fig. 40 ]

[ Fig. 41 ]

[ Fig. 42 ]

[ Fig. 43 ]

[ Fig. 44 ]

[ Fig. 45 ]

[ Fig. 46 ]

[ Fig. 47 ]

[ Fig. 48 ]

## INTERNATIONAL SEARCH REPORT

| International application No. |
| --- |
| **PCT/JP2023/018093** |

**A. CLASSIFICATION OF SUBJECT MATTER**

*H02J 50/40*(2016.01)i; *H02J 50/12*(2016.01)i
FI: H02J50/40; H02J50/12

According to International Patent Classification (IPC) or to both national classification and IPC

**B. FIELDS SEARCHED**

Minimum documentation searched (classification system followed by classification symbols)

H02J50/40; H02J50/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-005614 A (TOYOTA MOTOR CORP) 07 January 2013 (2013-01-07)<br>paragraphs [0025]-[0108], fig. 1-8 | 1-27 |
| A | JP 2015-122920 A (DAIHEN CORP) 02 July 2015 (2015-07-02)<br>paragraphs [0025]-[0069], fig. 1-8 | 1-27 |

☐ Further documents are listed in the continuation of Box C.     ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 July 2023** | **01 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

INTERNATIONAL SEARCH REPORT
Information on patent family members

International application No.

**PCT/JP2023/018093**

| Patent document cited in search report | | | Publication date (day/month/year) | Patent family member(s) | Publication date (day/month/year) |
|---|---|---|---|---|---|
| JP | 2013-005614 | A | 07 January 2013 | US 2014/0125144 A1 paragraphs [0039]-[0122], fig. 1-8 CN 103650289 A | |
| JP | 2015-122920 | A | 02 July 2015 | (Family: none) | |

Form PCT/ISA/210 (patent family annex) (January 2015)

70

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011050140 A
- WO 2022244730 A